# EUROPÄISCHE PATENTSCHRIFT

(11) **EP 3 960 570 B1**
(45) Veröffentlichungstag und Bekanntmachung des Hinweises auf die Patenterteilung: **10.06.2026**
(21) Anmeldenummer: 21185598.6
(22) Anmeldetag: 14.07.2021
(51) Int. Cl.: B60W 50/023, B60W 50/038, B60W 60/00, B60W 50/04

(54) **VERFAHREN ZUM BETREIBEN EINES KRAFTFAHRZEUGS, SICHERHEITSSYSTEM FÜR EIN KRAFTFAHRZEUG SOWIE KRAFTFAHRZEUG MIT EINEM SICHERHEITSSYSTEM**
METHOD FOR OPERATING A MOTOR VEHICLE, SAFETY SYSTEM FOR A MOTOR VEHICLE AND MOTOR VEHICLE WITH A SAFETY SYSTEM
PROCÉDÉ DE FONCTIONNEMENT D'UN VÉHICULE AUTOMOBILE, SYSTÈME DE SÉCURITÉ POUR UN VÉHICULE AUTOMOBILE, AINSI QUE VÉHICULE AUTOMOBILE DOTÉ D'UN SYSTÈME DE SÉCURITÉ

(30) Priorität: 01.09.2020 DE 102020211022
(43) Veröffentlichungstag der Anmeldung: 02.03.2022
(73) Patentinhaber: VOLKSWAGEN AG, 38440 Wolfsburg (DE)
(72) Erfinder: Schlimme, Hauke Christian, 38100 Braunschweig (DE); Bärecke, Frank, 38444 Wolfsburg (DE)

(56) Entgegenhaltungen:
- EP-A1- 3 333 030
- DE-A1- 102017 102 954
- DE-A1- 102017 213 496
- US-A1- 2016 071 418
- US-A1- 2020 142 407

## Beschreibung

Die Erfindung betrifft gemäß Patentanspruch 1 ein Verfahren zum Betreiben eines Kraftfahrzeugs. Des Weiteren betrifft die Erfindung gemäß Patentanspruch 5 ein Sicherheitssystem für ein Kraftfahrzeug sowie gemäß Patentanspruch 6 ein Kraftfahrzeug, das mit einem solchen Sicherheitssystem ausgerüstet ist.

Heutzutage bestehen in der Kraftfahrzeugtechnik weitreichende Bestrebungen, Kraftfahrzeuge, insbesondere Personenkraftwagen, immer weiter zu automatisieren, um einem Fahrer des Kraftfahrzeugs bzw. Personenkraftwagens immer weiter Fahraufgaben abzunehmen. Hierbei werden gemäß SAE J3016 die jeweiligen Automatisierungsgrade bzw. Autonomiegrade in fünf Level eingeteilt. Insbesondere im Zusammenhang mit den Levels 4 und 5, bei denen des dem Fahrer des Kraftfahrzeugs bzw. Personenkraftwagens zumindest erlaubt ist, die Erledigung der Fahraufgaben zumindest zeitweise vollständig dem Kraftfahrzeug zu überlassen, besteht natürlich der Bedarf, die gemäß Level 4 und/oder 5 automatisierten Kraftfahrzeuge besonders sicher auszubilden.

Bei einem vollautomatisierten Kraftfahrzeug (Level 4) ist es dem Fahrer erlaubt, die Erledigung der Fahraufgaben zumindest zeitweise, etwa über eine Gesamtdauer eines spezifischen Anwendungsfalls, vollständig dem Kraftfahrzeug zu überlassen - der Fahrer ist dann lediglich Passagier des Kraftfahrzeugs. Bei autonomen Kraftfahrzeugen (Level 5) ist überhaupt kein menschlicher Fahrer mehr vorgesehen. Das bedeutet, es werden mittels des gemäß Level 5 autonomen Kraftfahrzeugs lediglich Passagiere (und gegebenenfalls Fracht) befördert, wobei diese Passagiere zu keiner Zeit eine Fahraufgabe des Kraftfahrzeugs steuern oder beaufsichtigen/überwachen. Hieraus resultiert, dass der Fahrer im Falle eines kritischen Fehlers, der zu einem Ausfall eines Hauptbremssystems des Kraftfahrzeugs führt, nicht oder zumindest nicht schnell genug auf diesen kritischen Fehler reagieren kann, beispielsweise um das Kraftfahrzeug mittels eines sekundären Bremssystems (beispielsweise manuell) abzubremsen. Daher ist das Kraftfahrzeug, das einen Betriebsmodus gemäß Level 4 bzw. gemäß Level 5 bereitstellt, mit einem sekundären Bremsregelsystem ausgerüstet, das im Fehlerfall, insbesondere sofort nach Eintreten des Fehlerfalls, eine Betriebsbremsfunktionalität für das Kraftfahrzeug bereitstellt und gegebenenfalls aktiviert, um das Kraftfahrzeug bei ausgefallenem Hauptbremssystem sicher abzubremsen oder abbremsen zu können.

Es besteht des Weiteren der Bedarf, dass vollautomatisierte (Level 4) bzw. autonome (Level 5) Kraftfahrzeuge nach einem solchen kritischen Fehler des Hauptbremssystems nicht ausschließlich den Fahrbetrieb einstellen. Mit anderen Worten besteht der Bedarf, dass mit dem Kraftfahrzeug zumindest in eingeschränkter Weise eine Fahrt fortgesetzt werden kann, selbst wenn das Hauptbremssystem einem Fehler unterliegt, beispielsweise ausgefallen ist. Während dieser Weiterfahrt, bei welcher die Betriebsbremsfunktionalität dann mittels des sekundären Bremssystems bereitgestellt wird, kann es passieren, dass ein weiterer kritischer Fehler auftritt, der zu einem Ausfall des sekundären Bremssystems führt. Nach diesem weiteren kritischen Fehler sind Maßnahmen bei dem Kraftfahrzeug vorzusehen, um dieses zumindest sicher in den Stillstand abbremsen zu können. Hierfür ist zum Beispiel vorgesehen, dass das Kraftfahrzeug mit einem tertiären Bremssystem ausgerüstet ist, das bei ausgefallenem Hauptbremssystem und ausgefallenem sekundären Bremssystem eine Bremsfunktionalität für das Kraftfahrzeug bereitstellt, um das Kraftfahrzeug in sicherer Weise in den Stillstand abbremsen zu können. Während eines Fahrbetriebs, bei welchem das Hauptbremssystem ausgefallen ist bzw. dem kritischen Fehler unterworfen ist, wobei dann die Betriebsbremsfunktionalität für das Kraftfahrzeug durch das sekundäre Bremssystem bereitgestellt wird, lassen sich kritische Fahrtzustände, welche eine Leistungsfähigkeit des sekundären Bremssystems überfordern würden, nicht von vornherein ausschließen, bis mit dem Kraftfahrzeug beispielsweise eine Servicestation erreicht worden ist, um den Schaden an dem Hauptbremssystem bzw. den kritischen Fehler zu beheben.

Um diesem Problem zumindest teilweise zu begegnen, schlägt beispielsweise die US 2020 148 218 A1 eine computerimplementierte Methode vor, mittels derer ein autonomes Fahrzeug betrieben wird. In Antwort auf einen erfassten Fehler wenigstens eines Computergeräts des Fahrzeugs wird das Fahrzeug aus einem nominal-autonomen Betriebsmodus in einen degradiert-autonomen Betriebsmodus umgeschaltet, in dem Fahrtrouten mit bestimmten Merkmalen für das in dem degradiert-autonomen Betriebsmodus fahrende Fahrzeug ausgeschlossen werden.

Das Umschalten eines Fahrzeugs aus einem Normalbetriebsmodus in einen eingeschränkten Betriebsmodus, in welchem beispielsweise eine Antriebsleistung einer Antriebseinheit des entsprechenden Fahrzeugs begrenzt ist, ist jeweils beispielsweise aus der DE 10 2018 100 148 A1 sowie aus der DE 10 2014 213 171 A1 bekannt.

Ferner offenbart die DE 10 2017 213 496 A1 ein Verfahren für einen fehlertoleranten Betrieb eines Kraftfahrzeugs. Dabei kann ein vorausschauendes Erkennen bevorstehender Fahrmanöver eines Fahrzeugs vorgenommen werden. Beispielsweise können die dafür notwenigen Fahrzeugkomponenten und Fahrzeugfunktionen erkannt werden. Hierzu kann ein vorausschauendes Erkennen von möglichen in diesen Fahrzeugkomponenten und Fahrzeugfunktionen auftretenden Fehlern, welche die Durchführung der bevorstehenden Fahrmanöver beeinträchtigen können, durchgeführt werden.

Insassen des entsprechenden Kraftfahrzeugs sind infolgedessen dem eingeschränkten Betriebsmodus des entsprechenden Kraftfahrzeugs und/oder dem Umstand, dass bestimmten Routen oder Routenabschnitte im eingeschränkten Betriebsmodus vermieden werden, unterworfen und können - insbesondere aus Sicherheitsgründen - nicht oder nur gering Einfluss auf den eingeschränkten Betriebsmodus des Kraftfahrzeugs nehmen. Insbesondere wenn durch den eingeschränkten Betriebsmodus des entsprechenden Kraftfahrzeugs eine Fahrt unterbrochen wird oder sich wesentlich verlängert, führt dies zu persönlichen Problemen bzw. Unannehmlichkeiten für die Insassen des Kraftfahrzeugs, beispielsweise indem die Insassen zu spät zu einem Termin kommen, verschiedenste Buchungen nicht einhalten können etc.

Aufgabe der vorliegenden Erfindung ist es, für Insassen eines in einem Fehlerbetrieb betriebenen Kraftfahrzeugs Möglichkeiten bereitzustellen, eine Reise besonders effizient und besonders sicher fortzusetzen.

Diese Aufgabe wird durch ein Verfahren mit den in Patentanspruch 1 angegebenen Merkmalen gelöst. Des Weiteren wird diese Aufgabe durch ein Sicherheitssystem mit den in Patentanspruch 5 angegebenen Merkmalen gelöst. Überdies wird diese Aufgabe durch ein Kraftfahrzeug mit den in Patentanspruch 6 angegebenen Merkmalen gelöst.

Merkmale, Vorteile und vorteilhafte Ausgestaltungen des erfindungsgemäßen Sicherheitssystems sind als Merkmale, Vorteile und vorteilhafte Ausgestaltungen des erfindungsgemäßen Verfahrens anzusehen, wobei die Mittel des Sicherheitssystems zur Durchführung der Verfahrensschritte eingesetzt oder einsetzbar sind. Merkmale, Vorteile und vorteilhafte Ausgestaltungen des erfindungsgemäßen Sicherheitssystems sind als Merkmale, Vorteile und vorteilhafte Ausgestaltungen des erfindungsgemäßen Kraftfahrzeugs anzusehen und umgekehrt.

Erfindungsgemäß ist ein Verfahren zum Betreiben eines Kraftfahrzeugs vorgeschlagen, wobei es sich bei dem Kraftfahrzeug insbesondere um einen Kraftwagen, bevorzugt um einen Personenkraftwagen, handelt. Ferner ist das Kraftfahrzeug als ein zumindest vollautomatisch, bevorzugt autonom, antreibbares bzw. fortbewegbares Kraftfahrzeug ausgebildet. Das bedeutet, dass das Kraftfahrzeug Mittel umfasst, durch welche ein vollautomatischer, bevorzugt autonomer Fahrbetriebsmodus für das Kraftfahrzeug oder des Kraftfahrzeugs bereitstellbar ist. Bei dem Verfahren wird das Kraftfahrzeug bzw. der Personenkraftwagen aufgrund eines Fehlers, beispielsweise Erstfehlers, einer Hauptbremsanlage des Kraftfahrzeugs mittels einer Steuereinheit, welche insbesondere ein Bestandteil des Kraftfahrzeugs ist, aus einem Normalbetrieb in wenigstens einen Fehlerbetrieb, beispielsweise Erstfehlerbetrieb, umgeschaltet. Tritt also an der Hauptbremsanlage ein kritischer Fehler auf, wodurch die Hauptbremsanlage nicht mehr oder nicht mehr mit vollem Leistungsvermögen funktioniert und infolgedessen eine durch die Hauptbremsanlage bereitgestellte Betriebsbremsfunktionalität eingeschränkt oder ausgefallen ist, wird dieser kritische Fehler durch die Steuereinheit erfasst, beispielsweise indem die Steuereinheit die Hauptbremsanlage bzw. die durch die Hauptbremsanlage bereitgestellte Betriebsbremsfunktionalität (stetig) überwacht. Wird also mittels der Steuereinheit festgestellt, dass die Hauptbremsanlage dem kritischen Fehler unterworfen ist, das heißt dass der Fehler bzw. Erstfehler an/in der Hauptbremsanlage vorliegt, schaltet die Steuereinheit bestimmungsgemäß das Kraftfahrzeug in den Fehlerbetrieb, welcher als der Erstfehlerbetrieb ausgebildet ist, wenn die Hauptbremsanlage des Kraftfahrzeugs nicht oder nicht mehr vollständig funktioniert. In dem Fehlerbetrieb bzw. Erstfehlerbetrieb wird dann - etwa mittels der Steuereinheit - ein Leistungsvermögen einer Antriebseinheit des Kraftfahrzeugs reduziert. Funktioniert also die Hauptbremsanlage des Kraftfahrzeugs nicht mehr oder nicht mehr vollständig bestimmungsgemäß, wird beispielsweise mittels der Steuereinheit verhindert, dass mit dem Kraftfahrzeug auf eine Fahrgeschwindigkeit beschleunigt wird, aus welcher das Kraftfahrzeug, beispielsweise mittels einer weiteren Bremsanlage, nicht mehr sicher abzubremsen wäre. Das Leistungsvermögen der Antriebseinheit des Kraftfahrzeugs kann insbesondere auf null reduziert werden.

Bei dem Verfahren ist des Weiteren vorgesehen, dass wenigstens eine Navigationsfunktion des Kraftfahrzeugs aktiviert wird. Beispielsweise kann, etwa mittels eines Navigationssystems des Kraftfahrzeugs und/oder mittels der Steuereinheit, eine aktuelle Fahrtroute im Lichte des Fehlerbetriebs untersucht werden, um wenigstens einen Routenabschnitt auszuschließen bzw. zu umfahren. Des Weiteren ist es denkbar, dass durch die im Fehlerbetrieb aktivierte Navigationsfunktion eine alternative Route, insbesondere ein alternatives Ziel, bereitgestellt wird, wobei dann diese alternative Fahrtroute bzw. das alternative Ziel mit dem Fehlerbetrieb des Kraftfahrzeugs, insbesondere mit einem Leistungsvermögen der Bremsanlage bzw. der Bremsanlagen des Kraftfahrzeugs korrespondiert, die in dem Fehlerbetrieb die Betriebsbremsfunktionalität bereitstellt bzw. bereitstellen.

Um übermäßig starke terminliche Verzögerungen für die Insassen des Kraftfahrzeugs, das in dem Fehlerbetrieb betrieben wird, zu vermeiden, ist es erforderlich, für die Insassen Möglichkeiten bereitzustellen, deren Reise besonders effizient und besonders sicher fortzusetzen, was bei dem Verfahren erfindungsgemäß dadurch gelöst wird, dass in dem Fehlerbetrieb mittels der Steuereinheit wenigstens eine weitere Funktion des Kraftfahrzeugs (das heißt eine weitere Kraftfahrzeugfunktion) aktiviert wird. Das bedeutet, dass bei dem Kraftfahrzeug, bei dem die Hauptbremsanlage dem Fehler bzw. Erstfehler unterworfen ist - erstens - der Fehlerbetrieb des Kraftfahrzeugs aktiviert wird, - zweitens - das Leistungsvermögen der Antriebseinheit reduziert wird, - drittens - die wenigstens eine Navigationsfunktion des Kraftfahrzeugs aktiviert wird und - viertens - die wenigstens eine weitere Funktion des Kraftfahrzeugs oder mehrere Funktionen des Kraftfahrzeugs aktiviert wird/werden.

Bei dieser wenigstens einen weiteren Kraftfahrzeugfunktion kann es sich insbesondere um eine von der Navigationsfunktion des Kraftfahrzeugs unterschiedliche Funktion handeln. Alternativ oder zusätzlich kann die weitere Kraftfahrzeugfunktion als eine Unterfunktion bzw. Subfunktion der Navigationsfunktion des Kraftfahrzeugs ausgebildet sein. Die wenigstens eine weitere Kraftfahrzeugfunktion ist dazu vorgesehen, eine voraussichtliche Reisezeit bzw. eine voraussichtliche Fahrtdauer für die Insassen des in dem Fehlerbetrieb betriebenen Kraftfahrzeugs einzustellen, wobei die Insassen des Kraftfahrzeugs besonders effizient und besonders sicher, insbesondere verkehrssicher, an ihr Ziel gelangen. Für diese wenigstens eine weitere Kraftfahrzeugfunktion gilt, dass diese sich nicht zwingend ausschließlich an dem Kraftfahrzeug direkt auswirkt. Stattdessen ist vorgesehen, dass durch die wenigstens eine weitere Kraftfahrzeugfunktion alternativ oder zusätzlich Gegebenheiten in einem Umfeld des Kraftfahrzeugs berücksichtigt und/oder beeinflusst werden. Mit anderen Worten wirkt sich die wenigstens eine weitere Kraftfahrzeugfunktion auf die Reise bzw. Fahrt des jeweiligen Insassen des Kraftfahrzeugs aus und insbesondere nicht ausschließlich auf das Kraftfahrzeug, mit dem der jeweilige Insasse die Reise bzw. Fahrt unternimmt.

Es ist vorgesehen, dass in dem Fehlerbetrieb eine Fehlerbremsanlage in einen Fehlerbetriebsmodus geschaltet wird, sodass das Kraftfahrzeug in dem Fehlerbetrieb mittels der Fehlerbremsanlage bremsbar ist. Ist also bei dem Kraftfahrzeug die Hauptbremsanlage ausgefallen, das heißt, liegt bei dem Kraftfahrzeug bzw. bei der Hauptbremsanlage der Erstfehler vor, wird die wenigstens eine weitere Funktion des Kraftfahrzeugs bzw. die wenigstens eine weitere Kraftfahrzeugfunktion aktiviert, wodurch die Fehlerbremsanlage, wobei es sich im Falle des Erstfehlers um eine Erstfehlerbremsanlage handelt, in den Fehlerbetriebsmodus geschaltet. In diesem Fehlerbetriebsmodus stellt dann die Erstfehlerbremsanlage die Betriebsbremsfunktionalität zumindest teilweise für das Kraftfahrzeug bereit. Denn es kann beispielsweise der Fall sein, dass aufgrund des Erstfehlers die Hauptbremsanlage des Kraftfahrzeugs noch teilweise funktioniert, sodass dann in dem Erstfehlerbetriebsmodus die Erstfehlerbremsanlage die Hauptbremsanlage zum Bremsen des Kraftfahrzeugs unterstützt. Mit anderen Worten wird dann eine gesamte Betriebsbremsfunktionalität für das Kraftfahrzeug durch die Erstfehlerbremsanlage im Zusammenspiel mit der Hauptbremsanlage bereitgestellt.

Wird das Kraftfahrzeug in dem Erstfehlerbetrieb betrieben, das heißt wird die Betriebsbremsfunktionalität für das Kraftfahrzeug zumindest teilweise durch die Erstfehlerbremsanlage bereitgestellt, kann es zu einem kritischen Fehler an der Erstfehlerbremsanlage kommen, wodurch diese nicht mehr oder nicht mehr vollständig funktioniert. Für diesen Fall ist das Kraftfahrzeug insbesondere mit einer Zweitfehlerbremsanlage ausgerüstet. Tritt an/in der Erstfehlerbremsanlage der kritische Fehler bzw. ein weiterer kritischer Fehler auf (was dann als Zweitfehler bezeichnet wird), wird das Kraftfahrzeug in einen Zweitfehlerbetrieb geschaltet, wobei dann die wenigstens eine weitere Kraftfahrzeugfunktion die Zweitfehlerbremsanlage ihrerseits in einen Fehlerbetriebsmodus schaltet, sodass das Kraftfahrzeug in dem Zweitfehlerbetrieb mittels der Zweitfehlerbremsanlage bremsbar ist. Weiter ist es möglich, dass das Kraftfahrzeug in dem Zweitfehlerbetrieb sowohl mittels der Erstfehlerbremsanlage als auch mittels der Zweitfehlerbremsanlage bremsbar ist - das heißt mittels einer Kombination aus der Erstfehlerbremsanlage und der Zweitfehlerbremsanlage. Denn es kann beispielsweise der Fall sein, dass aufgrund des Zweitfehlers die Erstfehlerbremsanlage des Kraftfahrzeugs noch teilweise funktioniert, sodass dann in dem Zweitfehlerbetriebsmodus die Zweitfehlerbremsanlage die Erstfehlerbremsanlage zum Bremsen des Kraftfahrzeugs unterstützt. Mit anderen Worten wird dann die gesamte Betriebsbremsfunktionalität für das Kraftfahrzeug durch die Zweitfehlerbremsanlage im Zusammenspiel mit der Erstfehlerbremsanlage bereitgestellt. Sind zum Beispiel sowohl die Hauptbremsanlage als auch die Erstfehlerbremsanlage noch teilweise bestimmungsgemäß funktionstüchtig, kann des Weiteren vorgesehen sein, dass die gesamte Betriebsbremsfunktionalität für das Kraftfahrzeug dann durch die Zweitfehlerbremsanlage im Zusammenspiel mit der Hauptbremsanlage und der Erstfehlerbremsanlage bereitgestellt wird.

Hierdurch weist das Kraftfahrzeug wenigstens zwei der Hauptbremsanlage nachgeschaltete Rückfallsysteme auf, sodass das Kraftfahrzeug selbst dann, wenn sowohl die Hauptbremsanlage als auch die Erstfehlerbremsanlage ausgefallen sind oder nur noch teilweise funktionieren, noch sicher in den Stillstand abbremsbar ist. Auf diese Weise ist einem Gedanken an eine besonders vorteilhafte Verkehrssicherheit des Kraftfahrzeugs in besonderem Maße Rechnung getragen.

Insbesondere im Zusammenhang mit dem Erstfehlerbetrieb des Kraftfahrzeugs, in welchem die Betriebsbremsfunktionalität teilweise oder vollständig durch die Erstfehlerbremsanlage bereitgestellt wird, ist vorgesehen, dass eine Weiterfahrt mit dem Kraftfahrzeug weiterhin gewährleistet ist. Dies kann beispielsweise dann vorgesehen sein, wenn mittels der Hauptbremsanlage des Kraftfahrzeugs eine Betriebsbremsfunktionalität noch größtenteils bereitstellbar ist und/oder wenn mittels der Erstfehlerbremsanlage, eventuell im Zusammenspiel mit der Hauptbremsanlage, die Betriebsbremsfunktionalität des Kraftfahrzeugs zumindest größtenteils bereitstellbar ist.

Dahingegen ist die Zweitfehlerbremsanlage dazu vorgesehen, das Kraftfahrzeug besonders sicher in den Stillstand abzubremsen, wobei in dem Zweitfehlerbetrieb dann eine Weiterfahrt mit dem Kraftfahrzeug nicht oder nur stark eingeschränkt vorgesehen ist und insbesondere unterbunden wird, etwa indem das Leistungsvermögen der Antriebseinheit auf null reduziert wird. Mit anderen Worten kann in dem Zweitfehlerbetrieb die Antriebseinheit derart betrieben werden, dass diese keinerlei Antriebsleistung zum Fortbewegen des Kraftfahrzeugs bereitstellt. Es ist des Weiteren vorgesehen, dass die Weiterfahrt des Kraftfahrzeugs im Zweitfehlerbetrieb fortgesetzt wird, um einen gefährlichen Streckenabschnitt zu verlassen bzw. von dem Kraftfahrzeug zu räumen. Das bedeutet, dass die Weiterfahrt zum Beispiel mit gedrosseltem Leistungsvermögen der Antriebseinheit fortgesetzt wird, damit eine kritische Verkehrssituation vermieden oder behoben wird. Wird das Kraftfahrzeug beispielsweise in einem Kreuzungsbereich in den Zweitfehlerbetrieb geschaltet, ist es für eine besonders hohe Verkehrssicherheit günstig, wenn das Kraftfahrzeug aus eigener Kraft aus dem Kreuzungsbereich fährt. Dies ist durch die - eventuell eingeschränkte - Weiterfahrt gewährleistet.

Es ist vorgesehen, dass in dem Fehlerbetrieb anhand eines Leistungsvermögens der Fehlerbremsanlage des Kraftfahrzeugs ein Leistungsvermögen der Antriebseinheit des Kraftfahrzeugs festgelegt wird. Für den Erstfehlerbetrieb bedeutet das, dass anhand des Leistungsvermögens der Erstfehlerbremsanlage das Leistungsvermögen der Antriebseinheit eingestellt wird, beispielsweise mittels der Steuereinheit. Dies gilt analog für den Zweitfehlerbetrieb: In diesem wird anhand des Leistungsvermögens der Zweitfehlerbremsanlage das Leistungsvermögen der Antriebseinheit des Kraftfahrzeugs festgelegt, insbesondere auf null reduziert. Es ist ferner denkbar, dass das Leistungsvermögen der Antriebseinheit bereits auf das Leistungsvermögen der Zweitfehlerbremsanlage angepasst wird, wenn der Erstfehler - und insbesondere der Zweitfehler - noch nicht aufgetreten ist. Hierdurch ist sichergestellt, dass die Zweitfehlerbremsanlage nicht durch einen Fahrzustand des Kraftfahrzeugs überfordert wird, wenn die Zweitfehlerbremsanlage besonders schnell nach dem Erstfehler oder direkt - beispielsweise wenn Erst- und Zweitfehler gleichzeitig auftreten - die gesamte Betriebsbremsfunktionalität für das Kraftfahrzeug bereitzustellen hat. Anders ausgedrückt wird sichergestellt, dass der Fahrzustand, der aufgrund des Drosselns des Leistungsvermögens der Erstfehlerbremsanlage im Erstfehlerbetrieb eingestellt wird, im Moment eines Übergebens/Übertragens von Verzögerungsaufgaben, das heißt der Betriebsbremsfunktionalität, des Kraftfahrzeugs an die Zweitfehlerbremsanlage, also bei - insbesondere direktem - Auftreten des Zweitfehlers, von der Zweitfehlerbremsanlage beherrscht wird.

Hierdurch ist in besonders vorteilhafter Weise sichergestellt, dass ein Leistungsvermögen der Antriebseinheit des Kraftfahrzeugs ein Leistungsvermögen der jeweiligen Fehlerbremsanlage nicht übersteigt, sodass eine Verkehrssicherheit im Zusammenhang mit dem im Fehlerbetrieb betriebenen Kraftfahrzeug besonders hoch ist. Das Leistungsvermögen der Antriebseinheit des Kraftfahrzeugs kann beispielsweise dahingehend reduziert werden, dass ein Beschleunigen auf eine Fahrgeschwindigkeit verhindert ist, aus welcher es der entsprechenden Fehlerbremsanlage nicht mehr möglich wäre, das Kraftfahrzeug sicher abzubremsen. In diesem Zusammenhang kann es insbesondere vorgesehen sein, dass die Antriebseinheit des Kraftfahrzeugs derart gesteuert wird, beispielsweise mittels der Steuereinheit, dass für eine vorgegebene oder vorgebbare Zeitdauer und/oder für eine vorgegebene oder vorgebbare Distanz das Kraftfahrzeug mittels der Antriebseinheit noch (verringert) beschleunigbar ist, beispielsweise bis auf eine Fahrgeschwindigkeit, aus welcher das Kraftfahrzeug mittels der entsprechenden Fehlerbremsanlage noch sicher abbremsbar ist. Nach Verstreichen dieser vorgegebenen oder vorgebbaren Zeitdauer und/oder nach Erreichen der vorgegebenen oder vorgebbaren Distanz wird dann das Leistungsvermögen der Antriebseinheit gedrosselt/reduziert, beispielsweise auf null gesetzt.

Dementsprechend kann vorgesehen sein, dass die Weiterfahrt im Erstfehlerbetrieb des Kraftfahrzeugs lediglich für die vorgegebene oder vorgebbare Zeitdauer und/oder für die vorgegebene oder vorgebbare Distanz aufrechterhalten wird. Nach verstrichener Zeitdauer und/oder nach Erreichen der Distanz wird das Kraftfahrzeug dann in den Zweitfehlerbetrieb geschaltet, in welchem dann das Kraftfahrzeug mittels der Zweitfehlerbremsanlage und/oder mittels der Erstfehlerbremsanlage und/oder mittels der Hauptbremsanlage zum Beispiel in den Stillstand abgebremst wird, um eine weitere (gegebenenfalls unsichere) Teilnahme am Straßenverkehr zu unterbinden. Eine ähnliche Funktion ist für den Zweitfehlerbetrieb vorgesehen. Wenn in diesem die Weiterfahrt des Kraftfahrzeugs ermöglicht wird (siehe oben), wird beispielsweise die Weiterfahrt in beschränktem Maße aufrechterhalten, um den gefährlichen Streckenabschnitt zu räumen. Im Unterschied zum Aufrechterhalten des Erstfehlerbetriebs gilt beim Aufrechterhalten der Weiterfahrt im Zweitfehlerbetrieb, dass die vorgegebene oder vorgebbare Zeitdauer und/oder die vorgegebene oder vorgebbare Distanz kleiner sind/ist.

Des Weiteren kann vorgesehen sein, dass der Zweitfehlerbetrieb vermieden wird, indem das Kraftfahrzeug im Erstfehlerbetrieb mittels der Erstfehlerbremsanlage und/oder mittels der Hauptbremsanlage in den Stillstand abgebremst wird, bevor der Zweitfehler auftritt. Dies kann beispielsweise geschehen, wenn die vorgebbare Zeitdauer verstrichen ist/wird und/oder die vorgegebene oder vorgebbare Distanz erreicht ist/wird. Demnach wird die Möglichkeit zur Weiterfahrt mit dem Kraftfahrzeug im Erstfehlerbetrieb aufrechterhalten, bis die vorgebbare Zeitdauer verstrichen ist und/oder die vorgegebene oder vorgebbare Distanz erreicht ist, wonach dann mittels der Erstfehlerbremsanlage und/oder mittels der Hauptbremsanlage das Kraftfahrzeug abgebremst wird. Es wird also nicht gewartet, bis der Zweitfehler auftritt, um das Kraftfahrzeug in den Stillstand zu bremsen. Es wird jedoch mit dem Abbremsen des Kraftfahrzeugs in den Stillstand zumindest so lange gewartet, bis das Kraftfahrzeug den gefährlichen Streckenabschnitt verlassen hat.

In weiterer Ausgestaltung des Verfahrens ist in vorteilhafter Weise vorgesehen, dass in dem Fehlerbetrieb, beispielsweise Erstfehlerbetrieb, eine der Hauptbremsanlage nachgeschaltete Fehlerbremsanlage des Kraftfahrzeugs, zum Beispiel die Zweitfehlerbremsanlage, in einen Bereitschaftsbetriebsmodus geschaltet und infolgedessen vorkonditioniert wird, sodass im Falle eines Fehlers einer anderen der Bremsanlagen, zum Beispiel der ersten Fehlerbremsanlage - also der Erstfehlerbremsanlage -, das Kraftfahrzeug unmittelbar zumindest mittels der der Hauptbremsanlage nachgeschalteten Fehlerbremsanlage - also beispielsweise der Zweitfehlerbremsanlage - und mit voller Leistungsfähigkeit der entsprechenden Fehlerbremsanlage bremsbar ist. Mit anderen Worten wird nicht gewartet, die als Rückfallsystem ausgebildete Fehlerbremsanlage bzw. Zweitfehlerbremsanlage zu aktivieren, bis der kritische Fehler (Zweitfehler) im Erstfehlerbetrieb, das heißt an/in der Erstfehlerbremsanlage, auftritt. Stattdessen wird die Zweitfehlerbremsanlage, die aufgrund des Zweitfehlers an/in der Erstfehlerbremsanlage die Betriebsbremsfunktionalität für das Kraftfahrzeug bereitstellen soll, vorbereitet, um verzugslos die Betriebsbremsfunktionalität für das Kraftfahrzeug bereitzustellen. Anders ausgedrückt wird ein insbesondere nahtloses Übergehen der Betriebsbremsfunktionalität von der Erstfehlerbremsanlage an die Zweitfehlerbremsanlage gewährleistet, sodass während eines Fahrbetriebs des Kraftfahrzeugs, selbst wenn dieses in dem Erstfehlerbetrieb betrieben wird, ein sicheres Abbremsen des Kraftfahrzeugs gewährleistet ist. Hierdurch ist erneut die Verkehrssicherheit des Kraftfahrzeugs in vorteilhafter Weise verbessert.

Mittels des Vorkonditionierens wird des Weiteren der Zweck verfolgt, das (jeweilige) Leistungsvermögen der (jeweiligen) der Hauptbremsanlage nachgeschalteten Fehlerbremsanlage zu verbessern, welches direkt nach dem zumindest teilweisen Übernehmen der Betriebsbremsfunktionalität durch die entsprechende Fehlerbremsanlage zur Verfügung steht. Ist beispielsweise ein Bremsaktuator der Zweitfehlerbremsanlage durch eine elektrische Maschine, etwa einen Antriebsmotor, des Kraftfahrzeugs gebildet, ist deren generatorisches Bremsvermögen dadurch vorkonditionierbar und infolgedessen optimierbar, indem eine elektrische Energiespeichereinrichtung, beispielsweise ein Traktionsakkumulator, des Kraftfahrzeugs, bereits im Erstfehlerbetrieb durch ein Zuschalten von elektrischen Verbrauchern und/oder durch eine energetisch ineffiziente Fahrweise auf ein vorteilhaftes Niveau entladen wird. So ist es ermöglicht, mittels des Traktionsakkumulators bzw. mittels der Energiespeichereinrichtung mehr elektrische Energie aufzunehmen, die bei einem Bremsen des Kraftfahrzeugs durch die generatorisch betriebene elektrische Maschine erzeugt wird, um effizienter eine Fahrgeschwindigkeit des Kraftfahrzeugs abzubauen.

Es wird in dem Fehlerbetrieb, das heißt in dem Erstfehlerbetrieb und/oder in dem Zweitfehlerbetrieb, durch die Navigationsfunktion eine auf dem (jeweiligen) Fehlerbetrieb basierende Navigation bereitgestellt, etwa eine situationsadäquate Routenauswahl, insbesondere Zielauswahl, vorgenommen. Das bedeutet, dass eine aktuelle Navigation an den Erstfehlerbetrieb und/oder an den Zweitfehlerbetrieb angepasst wird, wodurch die auf dem (jeweiligen) Fehlerbetrieb basierende Navigation bereitgestellt wird. Weiter ist es denkbar, dass die aktuelle Navigation durch eine neue Navigation ersetzt wird, um die die auf dem (jeweiligen) Fehlerbetrieb basierende Navigation bereitzustellen. Es ist so - zumindest in indirekter Weise - die Navigation an die jeweilige Fehlerbremsanlage bzw. an deren Leistungsvermögen anpassbar. Zum einen kann die Navigation im Erstfehlerbetrieb an die Erstfehlerbremsanlage und/oder gegebenenfalls an die Zweitfehlerbremsanlage angepasst werden. Zum anderen kann, zumindest in dem Zweitfehlerbetrieb, die Navigation an die Zweitfehlerbremsanlage angepasst werden.

Wird das Kraftfahrzeug zum Beispiel im Erstfehlerbetrieb betrieben, wird die Navigation derart verändert bzw. neu bereitgestellt, dass diese mit dem Leistungsvermögen der Erstfehlerbremsanlage korrespondiert, sodass Fahrsituationen entlang der auf dem Erstfehler basierenden Navigation mittels der Erstfehlerbremsanlage in sicherer Weise beherrschbar sind. Alternativ oder zusätzlich wird in dem Erstfehlerbetrieb die Navigation derart verändert bzw. neu bereitgestellt, dass diese mit dem Leistungsvermögen der Zweitfehlerbremsanlage korrespondiert. So ist gewährleistet, dass anhand der auf dem Zweitfehlerbetrieb basierenden Navigation mit dem Kraftfahrzeug im Erstfehlerbetrieb kein Streckenabschnitt befahren wird, welcher Fahrsituationen erfordert oder zulässt, die mittels der Zweitfehlerbremsanlage nicht oder nur unzureichend beherrschbar ist. Dies ist insbesondere von Vorteil, wenn damit zu rechnen ist, dass aufgrund eines Zustands der Erstfehlerbremsanlage und/oder aufgrund von sich aufgrund der neuen/veränderten Navigation ergebenden Routengegebenheiten der Zweitfehler zu erwarten ist oder zumindest nicht ausgeschlossen werden kann. Natürlich ist es weiter denkbar, dass diese auf dem Zweitfehlerbetrieb basierende Navigation in dem Zweitfehlerbetrieb bereitgestellt wird, etwa nach/bei einem Auftreten des Zweitfehlers.

Hierzu können/kann das Navigationssystem des Kraftfahrzeugs und/oder die Steuereinheit zum Einsatz kommen. Demnach wird also eine aktuelle Navigation, anhand derer das Kraftfahrzeug fährt oder gefahren wird, verändert, sobald das Kraftfahrzeug dem Erstfehlerbetrieb und/oder dem Zweitfehlerbetrieb unterworfen ist. Das bedeutet, dass das Bereitstellen der auf dem jeweiligen Fehlerbetrieb basierenden Navigation die wenigstens eine weitere Funktion des Kraftfahrzeugs bzw. die weitere Kraftfahrzeugfunktion darstellt. In diesem Fall handelt es sich bei der zumindest einen weiteren Kraftfahrzeugfunktion um eine Unterfunktion oder Subfunktion der Navigationsfunktion, die aufgrund des Fehlers bzw. Erstfehlers und/oder Zweitfehlers aktiviert wird.

Es ist beabsichtigt, durch das Bereitstellen der auf dem Fehlerbetrieb basierenden Navigation, zum Beispiel die situationsadäquate Routenauswahl derart vorzunehmen, dass wenigstens ein Routenabschnitt der aktuellen Navigation, insbesondere die gesamte Navigation, hinsichtlich des Fehlerbetriebs des Kraftfahrzeugs geändert wird. Denn es kann sein, dass entlang der aktuellen, das heißt unveränderten Fahrtroute bzw. anhand der unveränderten Navigation für das Kraftfahrzeug Gegebenheiten vorliegen, die Fahrmanöver erfordern oder aufgrund derer Fahrmanöver ermöglicht sind, die mittels der jeweiligen Fehlerbremsanlage nicht in verkehrssicherer Weise zu beherrschen wären. Denn selbst wenn die Antriebseinheit des Kraftfahrzeugs derart mittels der Steuereinheit angesteuert wird, dass die Antriebseinheit lediglich einen Bruchteil ihres vollen Leistungsvermögens zum Beschleunigen bzw. Fortbewegen des Kraftfahrzeugs bereitstellt, kann die aktuelle bzw. unveränderte Navigation beinhalten, dass beispielsweise mit dem Kraftfahrzeug ein Gefälle bergab zu fahren ist, wodurch sich dann in nachteiliger Weise im Fehlerbetrieb des Kraftfahrzeugs die Fahrgeschwindigkeit des Kraftfahrzeugs, zum Beispiel aufgrund einer auf das Kraftfahrzeug wirkenden Hangabtriebskraft, in unerwünschter Weise erhöhen ließe, insbesondere bis hin zu einem Fahrgeschwindigkeitswert, aus welchem das Kraftfahrzeug mittels der entsprechenden Fehlerbremsanlage nicht mehr sicher bremsbar wäre. Es ist dann vorgesehen, dass zumindest dieser Routenabschnitt mit dem Gefälle umfahren wird, sodass nicht die Gefahr besteht, dass die Fahrgeschwindigkeit des Kraftfahrzeugs das Leistungsvermögen der Erstfehlerbremsanlage oder der Zweitfehlerbremsanlage oder einer Kombination aus Erstfehlerbremsanlage und Zweitfehlerbremsanlage (und gegebenenfalls Hauptbremsanlage) übersteigt.

In diesem Zusammenhang und wie in einer weiteren Ausgestaltung des Verfahrens vorgesehen, wird der Steuereinheit und/oder dem Navigationssystem des Kraftfahrzeugs mittels wenigstens einer kraftfahrzeugexternen Einrichtung und/oder mittels wenigstens einer kraftfahrzeuginternen Einrichtung wenigstens eine eine Fahrt des Kraftfahrzeugs charakterisierende Information bereitgestellt, anhand derer das Bereitstellen der auf dem Fehlerbetrieb basierenden Navigation in dem Fehlerbetrieb erfolgt. Die Fahrt des Kraftfahrzeugs umfasst insbesondere eine Umgebung des Kraftfahrzeugs, die aktuell verfolgte Navigation, beispielsweise die aktuelle Fahrtroute, die mittels des Navigationssystems verfolgt wird. Bei der jeweiligen kraftfahrzeugexternen Einrichtung kann es sich beispielsweise um eine Servereinrichtung, insbesondere Cloudservereinrichtung, handeln, die zur Datenkommunikation mit der Steuereinheit und/oder mit dem Navigationssystem gekoppelt oder koppelbar ist. Um die die Fahrt des Kraftfahrzeugs zumindest teilweise charakterisierende Information bereitzustellen, kann des Weiteren die wenigstens eine kraftfahrzeuginterne Einrichtung oder mehrere kraftfahrzeuginterne Einrichtungen zum Einsatz kommen, beispielsweise das Navigationssystem, in welchem Navigationsdaten gespeichert sind oder werden, eine Kraftfahrzeugsensorik, insbesondere Umfelderfassungssensorik, eine Kommunikationseinheit des Kraftfahrzeugs, die zur Fahrzeug-zu-Fahrzeug-Datenkommunikation ausgebildet ist, die Antriebseinheit, die Hauptbremsanlage, die Erstfehlerbremsanlage, die Zweitfehlerbremsanlage etc.

Anhand der Informationen, die der Steuereinheit bzw. dem Navigationssystem bereitgestellt werden, wird mittels der Steuereinheit eine Vielzahl von möglichen Fahrtzielen (beispielsweise ein Reiseziel der Insassen, eine Servicestation bzw. Werkstatt, eine Haltemöglichkeit bzw. Parkplatz etc.) bestimmt, die mittels des im Erstfehlerbetrieb betriebenen Kraftfahrzeugs sicher, insbesondere verkehrssicher, zu erreichen sind. Insbesondere wird bei dem Bestimmen der möglichen Fahrtziele berücksichtigt, ob das verkehrssichere Erreichen des entsprechenden Fahrtziels durch das Leistungsvermögen der Zweitfehlerbremsanlage abgedeckt ist, etwa, wenn zu erwarten ist, dass der Zweitfehler auftritt. Hierbei werden die einzelnen möglichen Fahrtziele unter Berücksichtigung des Leistungsvermögens der Fehlerbremsanlage bzw. Erstfehlerbremsanlage und/oder Zweitfehlerbremsanlage priorisiert, sodass mit dem im Fehlerbetrieb betriebenen Kraftfahrzeug das am einfachsten bzw. am sichersten zu erreichende der Ziele als neues Fahrtziel ausgewählt wird. Des Weiteren können die Fahrtziele unter Berücksichtigung des Leistungsvermögens der Antriebseinheit priorisiert werden, insbesondere wenn das Leistungsvermögen der Antriebseinheit aufgrund des Erstfehlerbetriebs und/oder Zweitfehlerbetriebs gedrosselt wird oder ist. Hierbei werden beispielsweise Streckenabschnitte, die anhand der vorliegenden Navigation entlang der Fahrtroute zu dem entsprechenden neuen Fahrtziel vorliegen würden, vermieden, die beispielsweise aufgrund schlechter Witterungsbedingungen einen besonders niedrigen Reibbeiwert zwischen einer Fahrbahnoberfläche und Rädern des Kraftfahrzeugs bereitstellen. Ebenso werden Abschnitte mit starkem Gefälle vermieden, an welchen - wie bereits dargelegt - eine Fahrgeschwindigkeit des Kraftfahrzeugs in unerwünschter Weise erhöht werden kann und/oder welche aufgrund des jeweiligen (gedrosselten) Leistungsvermögens der Antriebseinheit in dem jeweiligen Fehlerbetrieb durch das Kraftfahrzeug nicht erklimmbar sind.

In diesem Zusammenhang ist es weiterhin denkbar, dass wenigstens ein Insasse des Kraftfahrzeugs selbst oder - wenn das Kraftfahrzeug ohne Insassen fährt, beispielsweise als reines insassenfreies Frachttransportfahrzeug - dessen Bediener die einzelnen Fahrtziele priorisieren, wobei dann die durch die Steuereinheit und/oder das Navigationssystem vorgegebenen Streckenrestriktionen mit den Fahrtzielpriorisierungen der Insassen bzw. des Bedieners des Kraftfahrzeugs abgeglichen werden. Hierbei wird, etwa durch das Navigationssystem, eine Route zu dem durch die Fahrzeuginsassen priorisierten Fahrtziel nur dann vorgeschlagen, wenn diese von mindestens einer der Fehlerbremsanlagen beherrschbar ist. Ist dies nicht der Fall, wird mittels des Navigationssystems auf ein anderes Fahrtziel ausgewichen und/oder eine andere Route vorgeschlagen. Für den Fall, dass das Kraftfahrzeug vollautomatisiert oder autonom fahrbar bzw. fortbewegbar ausgebildet ist, wird das durch den Fahrzeuginsassen/Bediener priorisierte Ziel nur dann angefahren, wenn dies über die sichere Route erreichbar ist. Wenn dies nicht der Fall ist, fährt das Kraftfahrzeug autonom eines der anderen Ziele an. Durch eine derartige situationsadäquate Auswahl der Navigation mit der sicheren Route bzw. des Ziels lassen sich gefährliche Fahrsituationen vermeiden. Zudem ist für den/die Insassen/Bediener ein besonders vorteilhafter Nutzen des Kraftfahrzeugs gewährleistet, wenn dieser/diese Einfluss auf die Streckenführung des Kraftfahrzeug nehmen können. Denn es kann zum Beispiel sein, dass der Bediener des Kraftfahrzeugs, welcher insbesondere nicht als Insasse in dem Kraftfahrzeug sitzt, bevorzugt, eine Fahrt mit dem Kraftfahrzeug zu beenden, anstatt ein alternatives Ziel anzufahren.

Es ist eine kollaborative Insassenbergung vorgesehen. Mit anderen Worten ist bei dem Verfahren vorgesehen, dass in dem Fehlerbetrieb mittels des Kraftfahrzeugs autonom ein Insassenwechseltreffpunkt identifiziert und ein weiteres Kraftfahrzeug zu diesem Insassenwechseltreffpunkt gerufen wird. Das bedeutet, dass die wenigstens eine weitere Funktion des Kraftfahrzeugs bzw. die wenigstens eine weitere Kraftfahrzeugfunktion - wenn diese aktiviert wird - zur Folge hat, dass, insbesondere mittels der Steuereinheit, der Insassenwechseltreffpunkt identifiziert wird, sobald der kritische Fehler an/in der Hauptbremsanlage zu dem Erstfehlerbetrieb des Kraftfahrzeugs führt bzw. geführt hat. Des Weiteren umfasst in diesem Fall die weitere Kraftfahrzeugfunktion, dass ein weiteres Kraftfahrzeug zu dem Insassenwechseltreffpunkt gerufen wird, sodass es den Insassen des Kraftfahrzeugs, das dem Erstfehlerbetrieb unterworfen ist, ermöglicht ist, ihre Reise bzw. Fahrt mit dem zum Insassenwechseltreffpunkt gerufenen Kraftfahrzeug fortzusetzen, indem die Insassen aus dem im Erstfehlerbetrieb betriebenen Kraftfahrzeug in das weitere Kraftfahrzeug umsteigen können.

Zum einen ist es denkbar, dass das Kraftfahrzeug, bei welchem der Erstfehler aufgetreten ist, sofort den Insassenwechseltreffpunkt identifiziert und das weitere Kraftfahrzeug zu diesem Insassenwechseltreffpunkt ruft, wenn der Erstfehler aufgetreten ist. Zum anderen ist denkbar, dass das Kraftfahrzeug, das in dem Erstfehlerbetrieb betrieben wird, erst dann den Insassenwechseltreffpunkt identifiziert und das weitere Kraftfahrzeug zu diesem Insassenwechseltreffpunkt ruft, wenn das Kraftfahrzeug bereits einige Zeit, beispielsweise für die vorgegebene bzw. vorgebbare Zeitdauer, in dem Fehlerbetrieb bzw. Erstfehlerbetrieb betrieben worden ist. Besonders bevorzugt ist es, wenn mittels des Kraftfahrzeugs der Insassenwechseltreffpunkt identifiziert wird, bevor die vorgebbare bzw. vorgegebene Zeitdauer verstrichen ist, um noch den identifizierten Insassenwechseltreffpunkt bestimmungsgemäß zu erreichen.

Bei dem weiteren Kraftfahrzeug kann es sich beispielsweise um ein Taxi, um einen Mietwagen, um ein Fahrzeug eines Fahrdienstes etc. handeln. Gleichermaßen ist es denkbar, dass der Insassenwechseltreffpunkt derart festgelegt wird, dass es den Insassen des Kraftfahrzeugs ermöglicht ist, besonders einfach und/oder aufwandsarm eine Haltestelle eines öffentlichen Linienverkehrsnetzes zu erreichen, um ihre jeweilige Reise bzw. Fahrt dann mittels der öffentlichen Verkehrsmittel fortzusetzen. Insbesondere hinsichtlich einer immer weiter fortschreitenden Automatisierung des Individualverkehrs kann vorgesehen sein, dass das zu dem Insassenwechseltreffpunkt gerufene Kraftfahrzeug zumindest vollautomatisiert, insbesondere autonom, antreibbar bzw. fortbewegbar ausgebildet ist. In diesem Fall kann dann beispielsweise die Fahrzeug-zu-Fahrzeug-Datenkommunikation zwischen dem Kraftfahrzeug, das dem Fehlerbetrieb unterliegt, und dem zu dem Insassenwechseltreffpunkt gerufenen Kraftfahrzeug eingesetzt werden.

Ferner ist es bei dem Verfahren von Vorteil, wenn in dem Fehlerbetrieb mittels des Kraftfahrzeugs autonom ein den/die Insassen betreffender Termin vereinbart oder verschoben wird. Das bedeutet, dass, wenn das Kraftfahrzeug in dem Fehlerbetrieb, beispielsweise Erstfehlerbetrieb, betrieben wird, als die wenigstens eine weitere Funktion des Kraftfahrzeugs bzw. als die weitere Kraftfahrzeugfunktion mittels des Kraftfahrzeugs, insbesondere mittels der Steuereinheit, ohne ein aktives Zutun des entsprechenden Insassen wenigstens ein Termin vereinbart oder verschoben wird oder dies dem/den Insassen zumindest vorgeschlagen wird. Hierzu kann beispielsweise eine Kommunikationseinrichtung des Kraftfahrzeugs zum Einsatz kommen, etwa ein Mobiltelefon, um eine Call-Center-Kommunikationsverbindung zu etablieren, über welche der jeweilige Insasse des Kraftfahrzeugs mit einem (menschlichen) Servicemitarbeiter des Call-Centers die entsprechende Terminvereinbarung bzw. -verschiebung durchführen kann. Alternativ oder zusätzlich kann vorgesehen sein, dass die Kommunikationseinrichtung eine Mensch-Fahrzeug-Kommunikationseinheit umfasst, welche beispielsweise als eine mit dem Internet verbundene oder verbindbare Computereinrichtung ausgebildet ist, sodass es dem jeweiligen Insassen des Kraftfahrzeugs ermöglicht ist, über diese Mensch-Fahrzeug-Kommunikationseinrichtung entsprechende Daten und/oder Befehle einzugeben, durch welche der den Insassen betreffende Termin vereinbart oder verschoben wird.

Darüber hinaus ist es denkbar, dass das Kraftfahrzeug autonom einen das Kraftfahrzeug betreffenden Termin, etwa einen Servicetermin, vereinbart/verschiebt oder den/dem Insassen des Kraftfahrzeugs das Ausführen dieser autonomen Funktion zumindest vorschlägt. Da es dazu kommen kann, dass die Weiterfahrt bzw. Weiterreise für die Insassen des Kraftfahrzeugs, das aufgrund des Fehlerbetriebs, insbesondere Erstfehlerbetriebs und/oder Zweitfehlerbetriebs, liegenbleibt, in besonders effizienter und insbesondere aufwandsarmer bzw. komfortabler Weise zu ermöglichen, kann nämlich der Bedarf bestehen, eine - insbesondere ungeplante - Unterbrechung bzw. Pause einzulegen. So kann es, beispielsweise aufgrund fortgeschrittener Tageszeit, erforderlich sein, eine Unterkunft für die Insassen des Kraftfahrzeugs zu suchen bzw. bereitzustellen, was durch die autonome Terminvereinbarung bzw. -verschiebung des Kraftfahrzeugs als die zumindest eine weitere Kraftfahrzeugfunktion ermöglicht ist. Denn es ist beispielsweise denkbar, dass das Kraftfahrzeug autonom eine Hotelbuchung vornimmt und/oder verlegt.

Die Erfindung betrifft des Weiteren ein Sicherheitssystem, das dazu ausgebildet ist, ein gemäß der vorstehenden Beschreibung ausgebildetes Verfahren durchzuführen. Das bedeutet, dass das Sicherheitssystem Mittel aufweist, die dazu konfiguriert sind, Verfahrensschritte des oben angegebenen Verfahrens durchzuführen.

Zu der Erfindung gehören auch Weiterbildungen des erfindungsgemäßen Sicherheitssystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Sicherheitssystems hier nicht noch einmal beschrieben.

Schließlich betrifft die Erfindung ein Kraftfahrzeug, insbesondere einen Personenkraftwagen, das ein vorstehend beschriebenes Sicherheitssystem aufweist. Ferner ist das Kraftfahrzeug als ein zumindest vollautomatisch, bevorzugt autonom, antreibbares bzw. fortbewegbares Kraftfahrzeug ausgebildet. Das bedeutet, dass das Kraftfahrzeug Mittel umfasst, durch welche ein vollautomatischer, bevorzugt autonomer Fahrbetriebsmodus für das Kraftfahrzeug oder des Kraftfahrzeugs bereitstellbar ist.

Zu der Erfindung gehören auch Weiterbildungen des erfindungsgemäßen Kraftfahrzeugs, die Merkmale aufweisen, wie sie bereits im Zusammenhang mit den Weiterbildungen des erfindungsgemäßen Verfahrens bzw. des erfindungsgemäßen Sicherheitssystems beschrieben worden sind. Aus diesem Grund sind die entsprechenden Weiterbildungen des erfindungsgemäßen Kraftfahrzeugs hier nicht noch einmal dargelegt.

Die Erfindung umfasst auch die Kombinationen der Merkmale der beschriebenen Ausführungsformen, soweit diese Kombinationen den durch die Patentansprüche definierte Schutzbereich nicht verlassen.

Im Folgenden ist ein Ausführungsbeispiel der Erfindung beschrieben. Hierzu zeigt:
- Fig. 1: eine schematische Ansicht eines Kraftfahrzeugs, das mit einem Sicherheitssystem ausgerüstet ist, welches zum Durchführen eines Verfahrens zum Betreiben des Kraftfahrzeugs ausgebildet ist; und
- Fig. 2: zur Verdeutlichung von Verfahrensschritten eine nach einem Erstfehler bevorzugte Betriebsstrategie zur Handlungsplanung.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

Im Folgenden werden ein Verfahren zum Betreiben eines Kraftfahrzeugs 1, ein Sicherheitssystem 2 zum Durchführen des Verfahrens sowie das Kraftfahrzeug 1 an sich gemeinsam beschrieben.

Das Sicherheitssystem, das in seiner Gesamtheit mit dem Bezugszeichen 2 bezeichnet ist, weist eine Steuereinheit 3 auf, die im vorliegenden Beispiel als Teil des Kraftfahrzeugs 1 ausgebildet ist. Mit anderen Worten weist das Kraftfahrzeug 1 das Sicherheitssystem 2 und infolgedessen die Steuereinheit 3 auf.

Das Kraftfahrzeug 1 ist dazu ausgebildet, vollautomatisch, insbesondere autonom, fortbewegt zu werden. Das bedeutet, dass beispielsweise eine Automatisierungseinheit (nicht dargestellt) für das Kraftfahrzeug 1 einen vollautomatischen Betriebsmodus und/oder einen autonomen Betriebsmodus bereitstellt, was bedeutet, dass bei dem Kraftfahrzeug 1 keine mechanische Verbindung zwischen einem eventuell vorhandenen Bremspedal und einem hydraulischen Bremskreis, beispielsweise eine Hauptbremsanlage 4 des Kraftfahrzeugs 1 vorhanden ist. Dies lieg vor allem darin begründet, dass ein Fahrer bzw.

Passagier oder Insasse des Kraftfahrzeugs 1 nicht unerwünscht bzw. versehentlich eine Bremsung des Kraftfahrzeugs 1 auslösen darf. Denn ist das Kraftfahrzeug 1 vollautomatisiert antreibbar ausgebildet, ist es dem Fahrer des Kraftfahrzeugs 1 erlaubt, eine Fahrzeugführung komplett abzugeben, wodurch der Fahrer dann zum (passiven) Passagier des Kraftfahrzeugs 1 wird. Ist das Kraftfahrzeug 1 autonom antreibbar ausgebildet, übernimmt das Kraftfahrzeug 1 sämtliche Fahraufgaben, sodass Insassen des autonom antreibbaren Kraftfahrzeugs 1 nur noch als Passagiere und nicht mehr als Fahrer angesehen werden. Das bedeutet, dass bei dem Kraftfahrzeug 1 dann zumindest die Hauptbremsanlage als eine so genannte Brake-by-Wire-Bremsanlage ausgebildet ist (Brake-by-Wire: Bremsen per Draht bzw. Signalkabel). Daher weist das vollautomatisiert antreibbar ausgebildete Kraftfahrzeug 1 ein sogenanntes integriertes Bremsregelsystem auf, welches mit iBRS abgekürzt werden kann. Dieses integrierte Bremsregelsystem ist Teil der Hauptbremsanlage 4 des vollautomatisiert antreibbaren bzw. autonom antreibbaren Kraftfahrzeugs 1 und detektiert durch eine sensorische Überwachung des Bremspedals (sofern vorhanden) eine Bremswunsch des Fahrers in einem manuellen Fahrmodus des Kraftfahrzeugs 1. Dieser Bremswunsch, der dann als elektrisches Signal vorliegt, wird mithilfe eines Geberzylinders in einen hydraulischen Bremsdruck umgewandelt. Dieser hydraulische Bremsdruck wird dann direkt oder indirekt an Radbremsen dosiert. Da das integrierte Bremsregelsystem über eine eigene Ventilsteuerung verfügt, können mittels des integrierten Bremsregelsystems sowohl ABS-Regeleingriffe als auch ESP-Regeleingriffe vorgenommen werden. Das integrierte Bremsregelsystem stellt also eine Einrichtung zum Erzeugen einer Bremskraft und eine damit korrespondierende Steuereinrichtung dar.

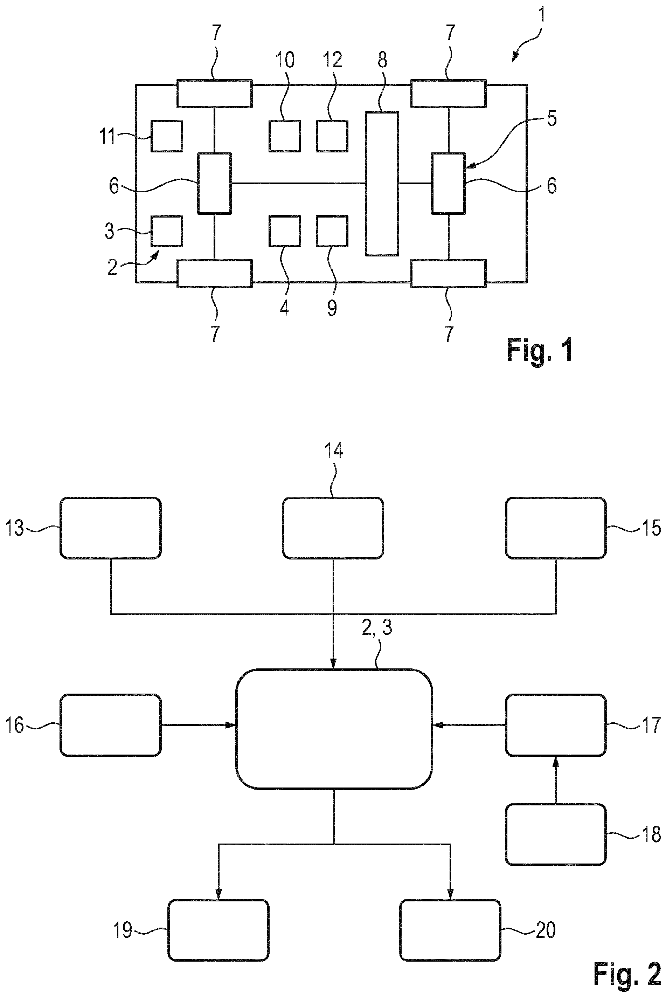

Im vorliegenden Beispiel ist das Kraftfahrzeug 1, das insbesondere vollautomatisch und/oder autonom betreibbar bzw. fortbewegbar ist, als ein zumindest teilweise elektrisch antreibbares bzw. fortbewegbares Kraftfahrzeug 1 ausgebildet. Das bedeutet, dass eine Antriebseinheit 5 des Kraftfahrzeugs 1 eine elektrische Antriebseinheit ist. Die elektrische Antriebseinheit 5 des Kraftfahrzeugs 1 weist wenigstens eine elektrische Maschine 6 auf, wobei nicht ausgeschlossen ist, dass das Kraftfahrzeug 1 wenigstens eine weitere elektrische Maschine 6 aufweist. Es ist beispielsweise denkbar, dass das Kraftfahrzeug 1 genau eine elektrische Maschine 6, genau zwei elektrische Maschinen 6, genau drei elektrische Maschinen 6, genau vier elektrische Maschinen 6 usw. aufweist. Beispielsweise kann die jeweilige elektrische Maschine 6 als ein Radnabenmotor ausgebildet sein, was bedeutet, dass eine Radnabe eines jeweiligen Rads 7 des Kraftfahrzeugs 1 zumindest teilweise durch die jeweilige elektrische Maschine 6 gebildet ist. Im vorliegenden Beispiel und wie in Fig. 1 dargestellt, weist das Kraftfahrzeug 1 zwei elektrische Maschinen 6 auf, wobei die jeweilige elektrische Maschine 6 mit einer jeweiligen Fahrzeugachse des Kraftfahrzeugs 1 zusammenwirkt.

Die elektrische Antriebseinheit 5 des Kraftfahrzeugs 1 weist des Weiteren eine elektrische Energiespeichereinrichtung 8 auf, die mit den elektrischen Maschinen 6 koppelbar oder gekoppelt ist. Um also das Kraftfahrzeug mittels der elektrischen Maschinen 6 anzutreiben bzw. fortzubewegen, werden die elektrischen Maschinen 6 jeweils motorisch betrieben. Hierzu sind die elektrischen Maschinen 6 direkt oder indirekt mit der elektrischen Energiespeichereinrichtung 8, beispielsweise einem elektrischen Traktionsakkumulator, verbunden, sodass den elektrischen Maschinen 6 mittels der elektrischen Energiespeichereinrichtung 8 elektrische Energie bereitgestellt wird, die in den jeweiligen elektrischen Maschinen 6 in eine mechanische Antriebsenergie für die Räder 7 umgewandelt wird.

Das Kraftfahrzeug 1 ist in einem Normalbetrieb betreibbar, in welchem zumindest die genannten Elemente, das heißt zumindest die Hauptbremsanlage 4 und die Antriebseinheit 5, bestimmungsgemäß mit jeweils vollem Leistungsvermögen betreibbar sind oder betrieben werden. Erleidet die Hauptbremsanlage 4 einen Schaden, wird das Kraftfahrzeug 1, insbesondere mittels der Steuereinheit 3, aus dem Normalbetrieb in einen Erstfehlerbetrieb geschaltet. Denn in diesem Fall ist die Hauptbremsanlage 4 beschädigt, sodass das Kraftfahrzeug 1 mittels der Hauptbremsanlage 4 nur noch in verringertem Maße oder gar nicht mehr abzubremsen ist. Denn die Hauptbremsanlage 4 weist, sobald sie dem Erstfehler unterliegt, nur noch ein gegenüber dem Normalbetrieb der Hauptbremsanlage 4 verringertes Leistungsvermögen auf. Um aber dennoch das Kraftfahrzeug 1 abbremsen zu können, wenn die Hauptbremsanlage 4 aufgrund des kritischen Fehlers bzw. Erstfehlers nicht mehr bestimmungsgemäß bzw. ordnungsgemäß funktioniert, ist bei dem Kraftfahrzeug 1 eine erste Rückfallebene in Form einer Erstfehlerbremsanlage 9 vorgesehen.

Die Erstfehlerbremsanlage 9 weist zum Beispiel ein weiteres integriertes Bremsregelsystem (iBRS) auf, welches gleich dem zuvor genannten iBRS ausgebildet sein kann. Für eine besonders hohe Betriebssicherheit des Kraftfahrzeug 1 ist es jedoch bevorzugt, wenn die Erstfehlerbremsanlage 9 ein von dem integrierten Bremsregelsystem unterschiedliches Bremsregelsystem aufweist, etwa ein ESC-Aggregat (ESC: electronic stability control - elektronische Stabilitätskontrolle). In besonders bevorzugter Weise weist die Erstfehlerbremsanlage 9 als Erstfehlerbremsaktuatoren Bremsaktuatoren der Hauptbremsanlage 4 auf. Das bedeutet, dass die Erstfehlerbremsanlage 9 dazu ausgebildet ist, mittels der Bremsaktuatoren der Hauptbremsanlage 4 das Kraftfahrzeug 1 zu bremsen.

Die Erstfehlerbremsanlage 9 weist alternativ oder zusätzlich die elektrischen Maschinen 6 auf, sodass dann die elektrischen Maschinen 6 im Zusammenspiel mit der Erstfehlerbremsanlage 9, das heißt im Erstfehlerbetrieb des Kraftfahrzeugs 1, einen jeweiligen Bremsaktuator bilden. Um das elektrisch antreibbare bzw. fortbewegbare Kraftfahrzeug 1 mittels der elektrischen Maschinen 6 abzubremsen, werden die elektrischen Maschinen 6 generatorisch betrieben. Es wird also mittels elektrischen Maschinen 6 oder zumindest mit einer der elektrischen Maschinen 6 eine auf das Kraftfahrzeug 1 wirkende Bremskraft erzeugt, die einem aktuellen Fahrgeschwindigkeitsvektor des Kraftfahrzeugs 1 entgegenwirkt. Hierbei wird die kinetische Energie des Kraftfahrzeugs 1 in elektrische Energie umgewandelt, die vorzugsweise der elektrischen Energiespeichereinrichtung 8 bereitgestellt wird, beispielsweise in diese eingespeist wird. Ist eine Energieaufnahmefähigkeit der elektrischen Energiespeichereinrichtung 8 vollständig ausgenutzt oder unzureichend, um das Kraftfahrzeug 1 bedarfsgerecht abbremsen zu können, kann ein weiterer Teil der elektrischen Energie weiteren im Kraftfahrzeug 1 eingesetzten elektrischen Verbrauchern bereitgestellt werden. Des Weiteren kann vorgesehen sein, eine Blindleistung in einer der elektrischen Maschinen 6 oder in beiden elektrischen Maschinen 6 zu erzeugen, sodass die elektrische Energie in Wärme umgewandelt und von den jeweiligen elektrischen Maschinen 6 abgestrahlt wird. Diese Wärme ist dann mittels eines - sofern im Kraftfahrzeug 1 eingesetzt - Motorkühlsystems abführbar. Alternativ oder zusätzlich kann ein Bremswiderstand vorgesehen werden, dem die beim Bremsen erzeugte elektrische Energie zugeführt wird, wodurch ebenfalls eine Umwandlung in Wärme erfolgt.

Alternativ oder zusätzlich kann die Erstfehlerbremsanlage 9 eine elektronisch steuerbare Feststellbremse("elektronische Parkbremse") aufweisen, welche dann im Erstfehlerbetrieb des Kraftfahrzeugs 1, beispielsweise mittels der Steuereinheit 3, angesteuert wird, um ein Bremsen des Kraftfahrzeugs 1 zumindest zu unterstützen. Insoweit sind dann die Erstfehlerbremsaktuatoren durch entsprechende Aktuatoren der Feststellbremse gebildet.

Das Kraftfahrzeug 1 weist im vorliegenden Beispiel als eine zweite Rückfallebene für die Hauptbremsanlage bzw. als eine erste Rückfallebene für die Erstfehlerbremsanlage eine Zweitfehlerbremsanlage 10 auf, die zumindest teilweise unterschiedlich von der Erstfehlerbremsanlage 9 ausgebildet ist. Analog zur Erstfehlerbremsanlage 9 kann die Zweitfehlerbremsanlage 10 ein weiteres integriertes Bremsregelsystem, ein weiteres ESC-Aggregat, die elektrischen Maschinen 6 und/oder die Feststellbrems aufweisen oder zumindest entsprechend ansteuern.

Die Zweitfehlerbremsanlage 10 ist für den Fall vorgesehen, wenn das Kraftfahrzeug 1 bereits in dem Erstfehlerbetrieb betrieben wird, das heißt eine Betriebsfunktionalität für das Kraftfahrzeug 1 durch die Erstfehlerbremsanlage 9 bereitgestellt wird. Denn es ist nicht auszuschließen, dass in dem Erstfehlerbetrieb ein weiterer kritischer Fehler sich an der Erstfehlerbremsanlage 9 auswirkt, sodass diese nicht mehr das volle Leistungsvermögen bereitstellen kann. Ist dies der Fall, das heißt unterliegt das Kraftfahrzeug 1, insbesondere die Hauptbremsanlage 4 und die Erstfehlerbremsanlage 9, dem Zweitfehler, schaltet die Steuereinheit 3 gemäß dem Verfahren das Kraftfahrzeug 1 in einen Zweitfehlerbetrieb, in welchem eine Betriebsbremsfunktionalität durch die Zweitfehlerbremsanlage 10 bereitgestellt wird.

Es ist zu verstehen, dass ein volles Leistungsvermögen der Hauptbremsanlage 4 größer ist als ein volles Leistungsvermögen der Erstfehlerbremsanlage 9. Des Weiteren ist zu verstehen, dass ein volles Leistungsvermögen der Erstfehlerbremsanlage 9 größer ist als ein volles Leistungsvermögen der Zweitfehlerbremsanlage 10. Mit anderen Worten ergibt sich für das Kraftfahrzeug 1 eine Hierarchie unter den Bremsanlagen 4, 9, 10. Dementsprechend ist es bevorzugt, in dem Normalbetrieb die Betriebsfunktionalität, insbesondere vollständig, durch die Hauptbremsanlage 4 bereitzustellen. Es ist jedoch nicht ausgeschlossen, dass selbst im Normalbetrieb die Zweitfehlerbremsanlage 10, das heißt beispielsweise die elektrischen Maschinen 6, zum Unterstützen einer Bremsung des Kraftfahrzeug 1 herangezogen werden. In dem Erstfehlerbetrieb des Kraftfahrzeugs 1, das heißt wenn ein kritischer Fehler bzw. Erstfehler an/in der Hauptbremsanlage 4 vorliegt, übernimmt die Erstfehlerbremsanlage 9 die Betriebsbremsfunktionalität für das Kraftfahrzeug 1 oder unterstützt diese zumindest teilweise.

Um sicherzustellen, dass das Leistungsvermögen der jeweiligen Fehlerbremsanlage ausreicht, um das Kraftfahrzeug 1 im entsprechenden Fehlerbetrieb bestimmungsgemäß abzubremsen, ist vorgesehen, dass, etwa mittels der Steuereinheit 3, ein Leistungsvermögen der Antriebseinheit 5 des Kraftfahrzeugs 1 reduziert wird. Beispielsweise wird das Leistungsvermögen der Antriebseinheit 5 dahingehend reduziert, dass ein Beschleunigen mit dem Kraftfahrzeug 1 auf eine Fahrgeschwindigkeit verhindert ist, aus welcher es nicht sicher möglich wäre, das Kraftfahrzeug 1 mittels der Erstfehlerbremsanlage 9 und/oder mittels der Zweitfehlerbremsanlage 10 abzubremsen, insbesondere in den Stillstand abzubremsen. Hierbei ist insbesondere vorgesehen, dass - ausgehend von dem Leistungsvermögen der Antriebseinheit 5 in dem Normalbetrieb des Kraftfahrzeugs 1 - das Leistungsvermögen der Antriebseinheit 5 entsprechend dem Leistungsvermögen der Erstfehlerbremsanlage gedrosselt wird. Alternativ oder zusätzlich ist das Leistungsvermögen der Antriebseinheit 5 ausgehend vom Normalbetrieb entsprechend der Zweitfehlerbremsanlage 10 drosselbar.

Im Zusammenhang mit der Erstfehlerbremsanlage 9, das heißt, wenn das das Kraftfahrzeug 1 in dem Erstfehlerbetrieb betrieben wird (die Hauptbremsanlage 4 hat einen kritischen Fehler, das heißt den Erstfehler, erlitten), ist vorgesehen, dass das Leistungsvermögen der Antriebseinheit 5 des Kraftfahrzeugs 1 - insbesondere mittels der Steuereinheit 3 - reduziert wird, und zwar entsprechend dem Leistungsvermögen der Erstfehlerbremsanlage 9 und/oder der Zweitfehlerbremsanlage 10. Dabei kann das im Erstfehlerbetrieb durch die Antriebseinheit noch bereitstellbare Leistungsvermögen eine Weiterfahrt mit dem Kraftfahrzeug 1 zulassen, etwa bis ein gefährlicher Streckenabschnitt verlassen wurde und/oder bis eine vorgegebene/vorgebbare Zeitdauer und/oder vorgegebene/vorgebbare Fahrtstrecke überschritten wird. Spätestens bei/nach dem Verlassen des gefährlichen Streckenabschnitts, spätestens bei/nach dem Überschreiten der vorgegebenen/vorgebbaren Zeitdauer und/oder spätestens bei/nach dem Überschreiten der vorgegebenen/vorgebbaren Fahrtstrecke wird das Leistungsvermögen auf null gesetzt, wodurch die Weiterfahrt dann unterbunden ist und der Zweitfehler gar nicht auftritt, wodurch das Kraftfahrzeug 1 geschont wird.

Im Zusammenhang mit der Zweitfehlerbremsanlage 10, das heißt, wenn das Kraftfahrzeug 1 in dem Zweitfehlerbetrieb betrieben wird (die Erstfehlerbremsanlage 9 hat einen kritischen Fehler, das heißt den Zweitfehler, erlitten), ist ebenfalls vorgesehen, dass das Leistungsvermögen der Antriebseinheit 5 des Kraftfahrzeugs 1 - insbesondere mittels der Steuereinheit 3 - reduziert wird. Dabei kann das dann in dem Zweitfehlerbetrieb durch die Antriebseinheit noch bereitstellbare Leistungsvermögen eine Weiterfahrt mit dem Kraftfahrzeug 1 zulassen, etwa bis ein gefährlicher Streckenabschnitt verlassen wurde und/oder bis eine vorgegebene/vorgebbare Zeitdauer und/oder vorgegebene/vorgebbare Fahrtstrecke überschritten wird. Spätestens bei/nach dem Verlassen des gefährlichen Streckenabschnitts, spätestens bei/nach dem Überschreiten der vorgegebenen/vorgebbaren Zeitdauer und/oder spätestens bei/nach dem Überschreiten der vorgegebenen/vorgebbaren Fahrtstrecke wird das Leistungsvermögen auf null gesetzt, wodurch die Weiterfahrt dann unterbunden ist. Dementsprechend ist bei dem Zweitfehlerbetrieb des Kraftfahrzeugs 1 vorgesehen, dass dieses zumindest noch in den Stillstand abgebremst werden kann, indem eine kinetische Energie des Kraftfahrzeugs 1 mittels der Zweitfehlerbremsanlage 10 beispielsweise soweit in Wärme und/oder elektrische Energie umgewandelt wird, bis das Kraftfahrzeug 1 in den Stillstand abgebremst worden ist.

In Fig. 1 ist des Weiteren zu erkennen, dass das Kraftfahrzeug 1 ein Navigationssystem 11 aufweist, welches dazu ausgebildet ist, einem Nutzer des Kraftfahrzeugs 1 eine Navigation bzw. Route zu einem designierten Ziel vorzuschlagen. Da das Kraftfahrzeug 1 im vorliegenden Beispiel vollsautomatisiert bzw. autonom antreibbar ausgebildet ist, ist vorgesehen, dass das Kraftfahrzeug 1 autonom bzw. vollautomatisiert anhand der Navigation fährt bzw. gefahren wird, die mittels des Navigationssystems 11 bestimmt, beispielsweise berechnet, worden ist. Die Navigation umfasst also zum einen das Ziel, das mit dem Kraftfahrzeug 1 erreicht werden soll, und zum anderen wenigsten eine mögliche Route hin zu diesem Ziel.

Um eine Kommunikation, insbesondere Datenkommunikation, zwischen dem Kraftfahrzeug 1 und wenigstens einem weiteren Kraftfahrzeug, wenigstens einem Infrastrukturelement, wenigstens einer Servereinrichtung (Cloudservereinrichtung) und/oder um eine Telefonverbindung bzw. Sprachverbindung zwischen Insassen des Kraftfahrzeugs 1 und wenigstens einer weiteren Person etablieren zu können, weist das Kraftfahrzeug 1 im vorliegenden Beispiel eine Kommunikationseinrichtung 12 auf. Diese weist beispielsweise ein Telefonelement auf, mittels dessen es Insassen des Kraftfahrzeugs 1 ermöglicht ist, ein Telefonat mit einer extern des Kraftfahrzeugs 1 befindlichen Person durchzuführen. Des Weiteren kann vorgesehen sein, dass die Kommunikationseinrichtung 12 einen Datentransceiver aufweist, der mit einem jeweiligen Datentransceiver des wenigstens einen weiteren Kraftfahrzeugs, des Infrastrukturelements und/oder der Servereinrichtung bzw. Cloudservereinrichtung korrespondiert. Dementsprechend ist eine Fahrzeug-zu-Fahrzeug-Datenkommunikation, eine Fahrzeug-zu-Infrastruktur-Datenkommunikation und/oder eine Datenkommunikation zwischen dem Kraftfahrzeug 1 und der Servereinrichtung ermöglicht.

Für das Sicherheitssystem 2 gilt, dass dieses (jeweils zumindest teilweise) die Steuereinheit 3, die Hauptbremsanlage 4, die Erstfehlerbremsanlage 9, die Zweitfehlerbremsanlage 10, das Navigationssystem 11 und/oder die Kommunikationseinrichtung 12 umfasst. Des Weiteren kann vorgesehen sein, dass das Sicherheitssystem 2 zumindest teilweise die Antriebseinheit 5 umfasst. Beispielsweise kann das Sicherheitssystem 2 eine jeweilige Steuereinrichtung der Hauptbremsanlage 4, der Erstfehlerbremsanlage 9, der Zweitfehlerbremsanlage 10, des Navigationssystems 11, der Kommunikationseinrichtung 12 und/oder der Antriebseinheit 5 umfassen, sodass es ermöglicht ist, dass mittels der Sicherheitssystems 2, insbesondere mittels dessen Steuereinheit 3, die Hauptbremsanlage 4, die Erstfehlerbremsanlage 9, die Zweitfehlerbremsanlage 10, das Navigationssystem 11, die Kommunikationseinrichtung 12 und/oder die Antriebseinheit 5 des Kraftfahrzeugs 1 steuerbar sind/ist.

Wie bereits dargelegt, wird also in dem Fehlerbetrieb, das heißt dem Erstfehlerbetrieb und/oder in dem Zweitfehlerbetrieb, das Leistungsvermögen der Antriebseinheit 5 des Kraftfahrzeugs 1 reduziert. Darüber hinaus ist bei dem jeweiligen Fehlerbetrieb vorgesehen, dass, beispielsweise mittels der Steuereinheit 3, wenigstens eine Navigationsfunktion des Kraftfahrzeugs 1, insbesondere des Navigationssystems 11, aktiviert wird. Hierbei ist zum Beispiel vorgesehen, dass die Navigation des Navigationssystems 11 insoweit geändert wird, also beispielsweise die Route zumindest insoweit umfahren wird, als Gegebenheiten entlang der Route einen sicheren Fahrbetrieb des Kraftfahrzeugs 1 ausschließen würden, wenn dieses im Erstfehlerbetrieb oder Zweitfehlerbetrieb betrieben wird. Beispielsweise wird ein besonders starkes Gefälle umfahren, wenn entlang der Route bzw. anhand der Navigation dort bergab gefahren werden müsste, da ein Bergabfahren mit dem Kraftfahrzeug 1 selbst dann zu einer Geschwindigkeitserhöhung führen würde, wenn das Leistungsvermögen der Antriebseinheit 5 gedrosselt ist.

Darüber hinaus ist bei dem Verfahren vorgesehen, dass in dem Fehlerbetrieb (Erstfehlerbetrieb und/oder Zweitfehlerbetrieb) mittels der Steuereinheit 3 wenigstens eine weitere Funktion des Kraftfahrzeugs 1, das heißt eine Kraftfahrzeugfunktion, aktiviert wird. Insbesondere sind in dem Kraftfahrzeug 1, insbesondere in der Steuereinheit 3, mehrere weitere Kraftfahrzeugfunktionen vorab gespeichert, wobei dann wenigstens eine dieser vorab gespeicherten weiteren Kraftfahrzeugfunktionen oder mehrere dieser vorab gespeicherten Kraftfahrzeugfunktionen abrufbar bzw. aktivierbar sind.

Beispielsweise ist als eine erste weitere Kraftfahrzeugfunktion vorgesehen, dass in dem Erstfehlerbetrieb des Kraftfahrzeugs 1 die Erstfehlerbremsanlage 9 in einen Fehlerbetriebsmodus geschaltet wird, sodass das Kraftfahrzeug 1 in dem Fehlerbetrieb mittels der Erstfehlerbremsanlage 9 bremsbar ist (wie bereits beschrieben).

Eine zweite weitere Kraftfahrzeugfunktion kann beispielsweise dahingehend ausgebildet sein, dass in dem Zweitfehlerbetrieb des Kraftfahrzeugs 1 die Zweitfehlerbremsanlage ihrerseits in einen Fehlerbetriebsmodus geschaltet wird, sodass das Kraftfahrzeug 1 in dem Fehlerbetrieb bzw. Zweitfehlerbetrieb mittels der Zweitfehlerbremsanlage 10 bremsbar ist.

Wie ebenfalls bereist weiter oben beschrieben wurde, ist das Leistungsvermögen der Antriebseinheit 5 an das Leistungsvermögen einer der Fehlerbremsanlagen 9, 10 anpassbar.

Dieses Anpassen bzw. Drosseln oder Reduzieren des Leistungsvermögens der Antriebseinheit 5 kann hierbei als eine dritte weitere Kraftfahrzeugfunktion angesehen werden, die aktiviert wird, sobald das Kraftfahrzeug 1 in den Erstfehlerbetrieb umgeschaltet wird oder ist.

Wird eine (beispielsweise vierte) weitere Kraftfahrzeugfunktion aktiviert, wird hierdurch in dem Erstfehlerbetrieb des Kraftfahrzeugs 1 die Zweitfehlerbremsanlage 10 in einen Bereitschaftsbetriebsmodus geschaltet und infolgedessen vorkonditioniert. Das bedeutet, dass in diesem Fall das Kraftfahrzeug 1 noch nicht in dem Zweitfehlerbetrieb betrieben wird, also an/in der Erstfehlerbremsanlage 9 noch kein kritischer Fehler (der Zweitfehler) aufgetreten ist. Es wird also bereits im Erstfehlerbetrieb des Kraftfahrzeugs 1 die Zweitfehlerbremsanlage 10 vorbereitet, sodass diese besonders schnell, insbesondere verzugslos, das Kraftfahrzeug 1 abbremsen kann, sobald an/in der Erstfehlerbremsanlage 9 der kritische Fehler bzw. Zweitfehler auftritt. Die Zweitfehlerbremsanlage wird also dahingehend vorkonditioniert, so schnell wie möglich nach dem Auftreten des Zweitfehlers die Betriebsbremsfunktionalität für das Kraftfahrzeug 1 zu übernehmen, insbesondere um das Kraftfahrzeug 1 sicher in den Stillstand abzubremsen.

Mittels des Vorkonditionierens wird des Weiteren der Zweck verfolgt, das (jeweilige) Leistungsvermögen der (jeweiligen) der Hauptbremsanlage 4 nachgeschalteten Fehlerbremsanlage 9, 10 zu verbessern, welches direkt nach dem zumindest teilweisen Übernehmen der Betriebsbremsfunktionalität durch die entsprechende Fehlerbremsanlage 9, 10 zur Verfügung steht. Ist beispielsweise ein Bremsaktuator der Zweitfehlerbremsanlage 10 durch die elektrischen Maschinen 6 gebildet, ist deren generatorisches Bremsvermögen dadurch vorkonditionierbar und infolgedessen optimierbar, indem der die elektrische Energiespeichereinrichtung 8 bzw. der Traktionsakkumulator des Kraftfahrzeugs 1 bereits im Erstfehlerbetrieb durch ein Zuschalten von elektrischen Verbrauchern und/oder durch eine energetisch ineffiziente Fahrweise auf ein vorteilhaftes Niveau entladen wird. So ist es ermöglicht, mittels des Traktionsakkumulators mehr elektrische Energie aufzunehmen, die bei einem Bremsen des Kraftfahrzeugs 1 durch wenigstens eine der generatorisch betriebenen elektrischen Maschinen 6 erzeugt wird, um effizienter eine Fahrgeschwindigkeit des Kraftfahrzeugs 1 abzubauen.

Die Steuereinheit 3 ist vorliegend dazu ausgebildet, die Bremsanlagen 4, 9, 10 zu überwachen und infolgedessen ein jeweiliges volles Leistungsvermögen der entsprechenden Bremsanlage 4, 9, 10 zu bestimmen bzw. zu ermitteln. Das jeweilige volle Leistungsvermögen der entsprechenden Bremsanlage 4, 9, 10 wird maßgeblich durch Einflussgrößen auf die entsprechende Bremsanlage 4, 9, 10 bestimmt, beispielsweise Fading (Bremskraftverlust aufgrund Erwärmung einer Reibkraftbremse und/oder eines Bremsfluids), Temperaturschwankungen in dem Bremsfluid, ein variierender Ladezustand SoC (State of Charge) der Energiespeichereinrichtung 8, Temperaturschwankungen der Energiespeichereinrichtung 8 bzw. des Traktionsakkumulators etc. Ermittelt die Steuereinheit 3 in diesem Zusammenhang, dass ein Ausfall oder ein wesentlicher Verlust des Leistungsvermögens der entsprechenden Bremsanlage 4, 9, 10 droht, aktiviert die Steuereinheit 3 die vierte weitere Kraftfahrzeugfunktion, um die jeweils nachgeschaltete Bremsanlage 9, 10 vorzubereiten bzw. vorzukonditionieren.

Soll beispielsweise als Erstfehlerbremsanlage 9 die Antriebseinheit 5, insbesondere die elektrischen Maschinen 6, zum Einsatz kommen, wobei aber der Traktionsakkumulator bzw. die elektrische Energiespeichereinrichtung 8 einen zu hohen Ladezustand und/oder eine zu hohe Temperatur aufweist, um in ausreichender Weise zu rekuperieren, wird dann die Antriebseinheit 5 als Erstfehlerbremsanlage 9 vorkonditioniert, wenn sich beispielsweise aufgrund von Fading ankündigt, dass ein kritischer Fehler bzw. der Erstfehler an/in der Hauptbremsanlage 4 auftritt. So kann beispielsweise vorgesehen sein, dass das Vorkonditionieren der Erstfehlerbremsanlage 9 bzw. der elektrischen Antriebseinheit 5 ein bestimmungsgemäßes Entladen der elektrischen Energiespeichereinrichtung 8 umfasst, beispielsweise indem weitere elektrische Verbraucher des Kraftfahrzeugs 1 von der elektrischen Energiespeichereinrichtung 8 mit elektrischer Energie versorgt werden, um den Traktionsakkumulator bzw. die elektrische Energiespeichereinrichtung 8 auf ein mit dem Erstfehlerbetrieb korrespondierendes Ladeniveau zu entladen. Des Weiteren kann vorgesehen sein, dass das Kraftfahrzeug 1 einen Halt bzw. Stopp einlegt, um die Temperatur des Traktionsakkumulators bzw. der elektrischen Energiespeichereinrichtung 8 zumindest insoweit abzusenken, als die Temperatur dann mit dem Erstfehlerbetrieb des Kraftfahrzeugs 1 korrespondiert. Ist eine solche Vorkonditionierung erfolgreich, ist hierdurch das Leistungsvermögen der Erstfehlerbremsanlage 9 bzw. der als Erstfehlerbremsanlage 9 eingesetzten Antriebseinheit 5 besonders hoch, sodass beispielsweise auf eine besonders starke Drosselung des Leistungsvermögens der Antriebseinheit 5 verzichtet werden kann. Das bedeutet, dass beispielsweise eine höhere Fahrgeschwindigkeit freigegeben werden kann, aus welcher das Kraftfahrzeug 1 dann bestimmungsgemäß und sicher mittels der Antriebseinheit 5 abbremsbar ist. Dies gilt in analoger Weise für den Fall, in dem die Zweitfehlerbremsanlage 10 die elektrischen Maschinen 6 umfasst. Die vorstehend genannten Maßnahmen zum zumindest teilweisen Entladen der elektrischen Energiespeichereinrichtung 8 finden dann derart in dem Erstfehlerbetrieb statt, dass das Ladeniveau mit dem (zu erwartenden) Zweitfehlerbetrieb korrespondiert.

Die jeweilige weitere Kraftfahrzeugfunktion kann überdies als eine Unterfunktion bzw. Subfunktion einer ohnehin in dem Kraftfahrzeug 1 vorhandenen Funktion sein, insbesondere einer Navigationsfunktion. So stellt beispielsweise eine (fünfte) weitere Kraftfahrzeugfunktion eine auf dem Erstfehlerbetrieb und/oder Zweitfehlerbetrieb basierende Navigation, etwa eine situationsadäquate Routenauswahl, bereit, wobei insbesondere ein aktuelles Ziel und/oder die aktuelle Route verändert werden/wird. Anders betrachtet kann die fünfte weitere Kraftfahrzeugfunktion ein Ändern einer aktuellen Navigation umfassen, wobei dann durch das Ändern der aktuellen Navigation die auf dem Fehlerbetrieb basierende (oder neue) Navigation bereitgestellt wird. Das bedeutet, dass mittels der Steuereinheit 3 das Navigationssystem 11 beispielsweise dahingehend gesteuert wird, eine Alternativroute zu der aktuellen Route zu ermitteln und diese den Insassen des Kraftfahrzeugs 1 vorzuschlagen. Ferner kann vorgesehen sein, dass das Navigationssystem 11 und/oder die Steuereinheit 3 dazu ausgebildet sind, die Alternativroute derart bereitzustellen, dass das Kraftfahrzeug 1 vollautomatisch bzw. autonom der Alternativroute folgt. Dabei werden die mit dem jeweiligen Fehlerbetrieb einhergehenden oder die durch den jeweiligen Fehlerbetrieb verursachten Einschränkungen durch die neue Navigation berücksichtigt.

Aufgrund von Navigationsdaten, Daten aus einer Fahrzeug-zu-Fahrzeug-Datenkommunikation, Daten aus einer Fahrzeug-zu-Infrastruktur-Datenkommunikation, Daten aus einer Fahrzeug-zu-Servereinrichtung-Datenkommunikation, Daten, die durch eine Sensorik, insbesondere Umfelderfassungssensorik, des Kraftfahrzeugs 1 bereitgestellt werden, jeweiligen Daten der jeweiligen Fehlerbremsanlage etc., ergibt sich ein eine Fahrt des Kraftfahrzeugs 1 charakterisierender Datensatz, der mittels des Sicherheitssystems 2 bzw. mittels der Steuereinheit 3 verarbeitbar oder weiterverarbeitbar ist. Basierend auf diesem Datensatz, der die Fahrt des Kraftfahrzeugs 1 charakterisiert, beispielsweise anhand der aktuellen Navigation, das heißt entlang der aktuell verfolgten Fahrtroute, bestimmt die Steuereinheit 3 bzw. das Sicherheitssystem 2 für das Kraftfahrzeug 1, das in dem Erstfehlerbetrieb oder in dem Zweitfehlerbetrieb betrieben wird, die auf dem jeweiligen Fehlerbetrieb basierende Navigation. Beispielsweise umfasst die auf dem jeweiligen Fehlerbetrieb basierende Navigation eine Vielzahl von Fahrtzielen (zum Beispiel ein Reiseziel der Insassen des Kraftfahrzeugs 1, eine Servicestation bzw. Werkstatt, eine Haltemöglichkeit bzw. einen Parkplatz etc.). Des Weiteren kann die aktuelle Navigation mittels der Steuereinheit 3 und/oder mittels des Navigationssystems 11 dahingehend geändert werden, beispielsweise ein Alternativziel und/oder die Alternativroute gewählt werden, dass das gewählte Alternativziel über die gewählte - weil sichere - Alternativroute mit dem Kraftfahrzeug 1 erreichbar ist, wobei das Leistungsvermögen der Antriebseinheit 5 im Lichte der gewählten Alternativroute und/oder im Lichte des gewählten Alternativziels berücksichtigt wird. Hierdurch ist gewährleistet, dass das Leistungsvermögen der Antriebseinheit 5 nicht durch eine unzweckmäßig gewählte Alternativroute und/oder nicht durch ein unzweckmäßig gewähltes Alternativziel überfordert wird. Mit anderen Worten sind Alternativroute und/oder Alternativziel derart zu wählen, dass diese mittels des Kraftfahrzeugs sicher abfahrbar bzw. anfahrbar sind. Indem die auf dem Fehlerbetrieb basierende Navigation anhand des Leistungsvermögens der jeweiligen Fehlerbremsanlage 9, 10 bereitgestellt wird, wird diese (neue) Navigation zumindest indirekt an das Leistungsvermögen der Antriebseinheit angepasst.

Diese Fahrtziele werden mittels der Steuereinheit 3 in dem Fehlerbetrieb des Kraftfahrzeugs 1 priorisiert, und zwar dahingehend, ob das aktuell verfügbare volle Leistungsvermögen der jeweiligen Fehlerbremsanlage 9, 10 ausreicht, um mit dem Kraftfahrzeug 1 zu dem entsprechenden Ziel sicher fahren zu können. Des Weiteren kann in die Priorisierung einfließen, ob das entsprechende Fahrtziel (ausschließlich) über die aktuelle Fahrtroute und/oder über eine Alternativroute erreichbar ist. Stellt das Sicherheitssystem 2 bzw. die Steuereinheit 3 fest, dass das maximal verfügbare Leistungsvermögen der Erstfehlerbremsanlage 9 und/oder der Zweitfehlerbremsanlage 10 unzureichend ist, um das höchstpriorisierte Ziel zu erreichen, wird stattdessen, etwa mittels des Navigationssystems 11, eine sichere Route zu einem niedriger priorisierten Fahrtziel bereitgestellt. Für die Priorisierung der Fahrtziele werden beispielsweise Wetterdaten, Gefälledaten, Verkehrsdaten (z. B. über Verkehrsaufkommen) etc. herangezogen, um eine besonders sichere Route zu dem entsprechenden Fahrtziel zu bestimmen. Zusätzlich können Präferenzen des/der Insassen oder des/der Bediener in die Priorisierung der Fahrtziele einfließen, um beispielsweise für die Insassen/Bediener des Kraftfahrzeugs den größten Nutzwert zu generieren.

Mittels einer (beispielsweise sechsten) weiteren Kraftfahrzeugfunktion wird - beispielsweise mittels des Sicherheitssystems 2 und/oder mittels der Steuereinheit 3 - autonom ein Insassenwechseltreffpunkt identifiziert und ein weiteres Kraftfahrzeug zu diesem Insassenwechseltreffpunkt gerufen. Dies ist insbesondere dann bevorzugt, wenn eine Weiterfahrt mit dem Kraftfahrzeug 1 nur noch besonders langsam oder gar nicht mehr ermöglich ist, beispielweise wenn das Kraftfahrzeug 1 in den Zweitfehlerbetrieb umgeschaltet wird, wodurch das Kraftfahrzeug 1 mittels der Zweitfehlerbremsanlage 10 vollständig in den Stillstand abgebremst wird. Denn in dem Zweitfehlerbetrieb verhindert das Sicherheitssystem 2, insbesondere dessen Steuereinheit 3, bestimmungsgemäß eine Weiterfahrt mit dem Kraftfahrzeug 1, da eine Verkehrssicherheit andernfalls nicht gewährleistet werden könnte. Unter bestimmten Umständen kann von diesem Ansatz abgewichen werden, beispielsweise wenn der Stillstand des Kraftfahrzeugs 1 an einem gefährlichen und/oder komplexen Streckenabschnitt erfolgen würde. Denn dann ist es bevorzugt, dass mittels des Kraftfahrzeugs sofort und aus eigener Kraft der gefährliche Streckenabschnitt verlassen wird. Zumindest in diesem Umfang bzw. zu diesem Zweck ist vorgesehen, dass in dem Zweitfehlerbetrieb eine Weiterfahrt noch gewährleistet wird, um das Kraftfahrzeug 1 und insbesondere - sofern vorhanden - dessen Insassen in Sicherheit zu bringen.

Um zu vermeiden, dass die Insassen des Kraftfahrzeugs 1, das mittels der Zweitfehlerbremsanlage 10 vollständig in den Stillstand abgebremst worden ist, "festsitzen", wird spätestens beim Eintritt des Zweitfehlers bzw., wenn das Kraftfahrzeug 1 in den Zweifehlerbetrieb umgeschaltet wird, die sechste weitere Kraftfahrzeugfunktion aktiviert, wodurch das Kraftfahrzeug 1 autonom bzw. selbstständig den Insassenwechseltreffpunkt identifiziert und das weitere Kraftfahrzeug zu diesem Insassenwechseltreffpunkt ruft. Beispielsweise kann es sich bei dem Insassenwechseltreffpunkt um eine Stelle handeln, an welcher das Kraftfahrzeug 1 in den Zweitfehlerbetrieb umgeschaltet worden ist. Weiter ist es denkbar, dass unter der Weiterfahrt - selbst im Zweitfehlerbetrieb - mit dem Kraftfahrzeug der Insassenwechseltreffpunkt angefahren wird.

Es ist des Weiteren denkbar, dass das Kraftfahrzeug 1 unter Auslösen bzw. Aktivieren der sechsten weiteren Kraftfahrzeugfunktion den Insassenwechseltreffpunkt entlang der aktuellen Fahrtroute identifiziert, wobei bis zu dem Insassenwechseltreffpunkt das Kraftfahrzeug 1 noch fährt, insbesondere in dem Erstfehlerbetrieb. Dies ist besonders vorteilhaft, da das Beordern des weiteren Kraftfahrzeugs zu dem Insassenwechseltreffpunkt schon geschehen kann, solange mit dem Kraftfahrzeug 1 noch gefahren werden kann. Auf diese Weise ist ein besonders geringer Zeitverzug für die Insassen des Kraftfahrzeugs 1 zu erwarten, obwohl dieses in den Erstfehlerbetrieb geschaltet worden ist, wodurch sich eine Reise bzw. Fahrt der Insassen des Kraftfahrzeugs 1 verzögert. Denn die Insassen müssen so lediglich eine besonders geringe Zeitdauer abwarten, bis das weitere Kraftfahrzeug an dem Insassenwechseltreffpunkt eintrifft - idealerweise trifft das weitere Kraftfahrzeug gleichzeitig mit dem Kraftfahrzeug 1 an dem Insassenwechseltreffpunkt ein oder wartet bereits dort.

Es ist des Weiteren denkbar, dass sich die wenigstens eine weitere Kraftfahrzeugfunktion auf Bereiche erstreckt, die nicht in direktem Zusammenhang mit dem Kraftfahrzeug 1 stehen. So kann beispielsweise unter einem Aktivieren einer (beispielsweise siebten) weiteren Kraftfahrzeugfunktion mittels des Kraftfahrzeugs 1, insbesondere mittels des Sicherheitssystems 2, autonom ein den/die Insassen betreffender Termin vereinbart oder verschoben werden. Denn es wird mittels des Sicherheitssystems 2 erkannt, dass das Kraftfahrzeug 1 in einen der Fehlerbetriebe geschaltet wird, wodurch die Gefahr besteht, dass der entsprechende Insasse des Kraftfahrzeugs 1 nicht mehr oder verspätet sein gewünschtes Fahrtziel bzw. Reiseziel erreicht. So ist beispielsweise denkbar, dass das Kraftfahrzeug 1, beispielsweise mittels der Kommunikationseinrichtung 12, eine Sprachkommunikationsverbindung zwischen den Insassen des Kraftfahrzeugs 1 und einem Servicemitarbeiter, beispielsweise eines Call-Centers, etabliert, wobei dann der (menschliche) Mitarbeiter des Call-Centers entsprechende Umbuchungen vornimmt, beispielsweise Hotelbuchungen etc. Des Weiteren ist es denkbar, dass die Kommunikationseinrichtung 12, die - wie bereits weiter oben dargelegt - die mit dem Internet verbundene Computereinrichtung aufweist, durch das Sicherheitssystem 2 bzw. durch die Steuereinheit 3 derart angesteuert bzw. betrieben wird, dass ohne ein aktives Zutun des Insassen des Kraftfahrzeugs 1 die den Insassen betreffenden Termine bzw. Buchungen online umterminiert werden.

Es ist des Weiteren in Zusammenhang mit der siebten weiteren Kraftfahrzeugfunktion denkbar, dass das Kraftfahrzeug 1 autonom einen das Kraftfahrzeug 1 betreffenden Termin vereinbart und/oder verschiebt, beispielsweise einen Servicetermin.

Fig. 2 zeigt zur Verdeutlichung von Verfahrensschritten eine nach dem Erstfehler bevorzugte Betriebsstrategie zur Handlungsplanung. Im Zentrum der Fig. 2 ist das Sicherheitssystem 2, insbesondere die Steuereinheit 3, dargestellt, wobei dem Sicherheitssystem 2 bzw. der Steuereinheit 3 zur Handlungsplanung Daten bzw. Gegebenheiten bereitgestellt werden, die ein Betriebssystem des Kraftfahrzeugs 1 charakterisieren. In einem ersten Block bzw. Datenblock 13 befinden sich die Fahrumgebung charakterisierende Daten bzw. Gegebenheiten in Datenform, beispielsweise Reibbeiwerte, Steigungen/Gefälle, Kurvenradien, Informationen über ein Verkehrsaufkommen, Informationen über eine Anzahl von Fahrspuren etc., und zwar - beispielsweise in Tabellenform - bezogen auf das jeweilige Fahrtziel bzw. bezogen auf die einzelnen Fahrtrouten, die zu den jeweiligen Fahrtzielen führen. Hierbei kann es sich bei dem jeweiligen Fahrtziel um eines der Fahrtziele handeln, die mittels des Navigationssystems 11 bzw. der Steuereinheit 3 durch die fünfte weitere Kraftfahrzeugfunktion vorgeschlagen bzw. eingestellt worden sind.

Ein weiterer Datenblock 14, der dem Sicherheitssystem 2 bzw. der Steuereinheit 3 bereitgestellt wird, um eine Handlungsplanung durchzuführen, weist den/die Insassen und/oder den/die Bediener charakterisierende Daten auf. Beispielsweise weist dieser Datenblock 14 Informationen bzw. Daten darüber auf, welche Priorisierung der Insasse bzw. die Insassen aus den vorgeschlagenen Zielen präferiert/präferieren. Die Zielpriorisierung kann beispielsweise derart gestaltet sein, dass der Insasse des Kraftfahrzeugs 1 seinem eigentlichen Reiseziel eine höchste Priorität verliehen hat. Des Weiteren ist es denkbar, dass der Insasse des Kraftfahrzeugs 1 eine zweithöchste Priorisierung einer Werkstatt bzw. einer Servicestation als Ziel verliehen hat, da er beispielsweise damit rechnet, dass ein lediglich kurzer Aufenthalt an der Servicestation erforderlich ist, um eine volle Leistungsfähigkeit des gesamten Kraftfahrzeugs 1 wiederherzustellen. Eine dritthöchste Priorisierung kann der Insasse beispielsweise einer Haltemöglichkeit, insbesondere dem Insassenwechseltreffpunkt, verliehen haben, um zum Beispiel auf öffentliche Verkehrsmittel umzusteigen oder um in das weitere Kraftfahrzeug umzusteigen, das, insbesondere autonom, an den Insassenwechseltreffpunkt gerufen wurde.

Ein dritter Datenblock 15 charakterisiert einen aktuellen Zustand des Kraftfahrzeugs 1. So umfasst der dritte Datenblock 15 beispielsweise Informationen über einen Fading-Zustand von Reibbremselementen des Kraftfahrzeugs 1, eine Information über einen State-of-Charge des Traktionsakkumulators bzw. der elektrischen Energiespeichereinrichtung 8, eine Temperatur des Traktionsakkumulators etc.

Zum Erarbeiten bzw. Durchführen der Handlungsplanung werden der Steuereinheit 3 - insbesondere zusätzlich zu dem Betriebssystem, zu welchem die Datenblöcke 13, 14, 15 zählen - Randbedingungen bereitgestellt, wobei diese Randbedingungen durch drei Datenblöcke 16, 17, 18 charakterisiert sind. In dem Datenblock 16, welcher ein erster Datenblock der Randbedingungen ist, wird ein minimales Leistungsvermögen der Erstfehlerbremsanlage 9 und/oder der Zweitfehlerbremsanlage 10 hinterlegt, welches zumindest erforderlich ist, um einen sicheren Fahrbetrieb entlang der Fahrtrouten zu einem jeweiligen Fahrtziel in dem Erstfehlerbetrieb des Kraftfahrzeugs 1 aufrechtzuerhalten und/oder eine leistungstechnische Überforderung der Zweitfehlerbremsanlage 10 bei Auftreten eine Zweitfehlers zu vermeiden. Demgegenüber beinhaltet der zweite Datenblock 17 der Randbedingungen ein maximal verfügbares Leistungsvermögen der Erstfehlerbremsanlage 9, das die Erstfehlerbremsanlage 9, hinsichtlich eines Fahrzeugzustands bzw. eines Zustands der Erstfehlerbremsanlage 9, zu leisten im Stande ist. Des Weiteren beinhaltet der zweite Datenblock 17 ein maximal verfügbares Leistungsvermögen der Zweitfehlerbremsanlage 10, das die Zweitfehlerbremsanlage 10, hinsichtlich eines Fahrzeugzustands bzw. eines Zustands der Zweitfehlerbremsanlage 10, zu leisten im Stande ist. Der dritte Datenblock 18 der Randbedingungen beschreibt diesen Zustand der Erstfehlerbremsanlage 9 sowie der Zweitfehlerbremsanlage 10, durch welche aufgrund der zuvor beschriebenen Vorkonditionierung Einfluss genommen werden kann. So beschreibt der Datenblock 18 den Zustand der Erstfehlerbremsanlage 9 sowie der Zweitfehlerbremsanlage 10 beispielsweise hinsichtlich eines Ladezustands der elektrischen Energiespeichereinrichtung 8, hinsichtlich einer Temperatur der elektrischen Energiespeichereinrichtung 8, hinsichtlich einer Temperatur der Bremselemente, beispielsweise der elektrischen Maschinen 6.

Aus den Datenblöcken 13, 14, 15, 16, 17, 18 berechnet oder bestimmt das Sicherheitssystem 2, insbesondere die Steuereinheit 3, die Handlungsplanung 19, wobei die Handlungsplanung beispielsweise das Aktivieren einer der zuvor dargelegten weiteren Kraftfahrzeugfunktionen umfasst. Alternativ oder zusätzlich wird aufgrund der Datenblöcke 13, 14, 15, 16, 17, 18 durch die Steuereinheit 3 bzw. durch das Sicherheitssystem 2 das Reduzieren des Leistungsvermögens der Antriebseinheit 5 durchgeführt, welches in Fig. 2 mit dem Bezugszeichen 20 versehen ist.

### Bezugszeichenliste

- 1: Kraftfahrzeug
- 2: Sicherheitssystem
- 3: Steuereinheit
- 4: Hauptbremsanlage
- 5: Antriebseinheit
- 6: elektrische Maschine
- 7: Rad
- 8: elektrische Energiespeichereinrichtung
- 9: Erstfehlerbremsanlage
- 10: Zweitfehlerbremsanlage
- 11: Navigationssystem
- 12: Kommunikationseinrichtung
- 13: Datenblock
- 14: Datenblock
- 15: Datenblock
- 16: Datenblock
- 17: Datenblock
- 18: Datenblock
- 19: Handlungsplanung
- 20: Reduzieren

## Patentansprüche

1. Verfahren zum Betreiben eines Kraftfahrzeugs (1), welches aufgrund eines Fehlers einer Hauptbremsanlage (4) des Kraftfahrzeugs (1) mittels einer Steuereinheit (3) aus einem Normalbetrieb in einen Fehlerbetrieb umgeschaltet wird, in welchem ein Leistungsvermögen einer Antriebseinheit (5) des Kraftfahrzeugs (1) reduziert wird sowie wenigstens eine Navigationsfunktion des Kraftfahrzeugs (1) aktiviert wird,
wobei in dem Fehlerbetrieb mittels der Steuereinheit (3) eine weitere Funktion des Kraftfahrzeugs (1) aktiviert wird,
in dem Fehlerbetrieb eine Fehlerbremsanlage (9, 10) in einen Fehlerbetriebsmodus geschaltet wird, sodass das Kraftfahrzeug (1) in dem Fehlerbetrieb mittels der Fehlerbremsanlage (9, 10) bremsbar ist,
in dem Fehlerbetrieb anhand eines Leistungsvermögens der Fehlerbremsanlage (9, 10) des Kraftfahrzeugs ein Leistungsvermögen einer Antriebseinheit (5) des Kraftfahrzeugs (1) festgelegt wird, **dadurch gekennzeichnet, dass**
bei einem Auftreten eines kritischen Fehlers oder eines weiteren kritischen Fehlers an/in der als Erstfehlerbremsanlage bezeichneten Fehlerbremsanlage (9) das Kraftfahrzeug (1) in einen Zweitfehlerbetrieb geschaltet wird, sodass das Kraftfahrzeug (1) in dem Zweitfehlerbetrieb mittels der als Zweitfehlerbremsanlage bezeichneten Fehlerbremsanlage (10) bremsbar ist,
die Antriebseinheit (5) des Kraftfahrzeugs (1) derart gesteuert wird, dass für eine vorgegebene oder vorgebbare Zeitdauer und/oder für eine vorgegebene oder vorgebbare Distanz das Kraftfahrzeug (1) mittels der Antriebseinheit (5) noch bis auf eine Fahrgeschwindigkeit beschleunigbar ist, aus welcher das Kraftfahrzeug (1) mittels der entsprechenden Fehlerbremsanlage (9, 10) noch sicher abbremsbar ist, in dem Fehlerbetrieb durch die Navigationsfunktion eine auf dem Fehlerbetrieb basierende Navigation bereitgestellt wird, und
in dem Fehlerbetrieb mittels des Kraftfahrzeugs (1) autonom ein Insassenwechseltreffpunkt identifiziert und ein weiteres Kraftfahrzeug zu diesem Insassenwechseltreffpunkt gerufen wird.

2. Verfahren nach Anspruch 1,
**dadurch gekennzeichnet, dass**
in dem Fehlerbetrieb eine der Hauptbremsanlage (4) nachgeschaltete Fehlerbremsanlage (9, 10) des Kraftfahrzeugs (1) in einen Bereitschaftsbetriebsmodus geschaltet und infolgedessen vorkonditioniert wird, sodass im Falle eines Fehlers einer anderen der Bremsanlagen (4, 9) das Kraftfahrzeug (1) unmittelbar zumindest mittels der der Hauptbremsanlage (4) nachgeschalteten Fehlerbremsanlage (9, 10) und mit voller Leistungsfähigkeit der entsprechenden Fehlerbremsanlage (9, 10) bremsbar ist.

3. Verfahren nach Anspruch 1 oder 2,
**dadurch gekennzeichnet, dass**
zum Bereitstellen der auf dem Fehlerbetrieb basierenden Navigation der Steuereinheit (3) mittels einer kraftfahrzeugexternen Einrichtung und/oder mittels einer kraftfahrzeuginternen Einrichtung eine eine Fahrt des Kraftfahrzeugs (1) charakterisierende Information bereitgestellt wird, anhand derer das Bereitstellen der auf dem Fehlerbetrieb basierenden Navigation in dem Fehlerbetrieb erfolgt.

4. Verfahren nach einem der vorhergehenden Ansprüche,
**dadurch gekennzeichnet, dass**
in dem Fehlerbetrieb mittels des Kraftfahrzeugs (1) autonom ein den/die Insassen betreffender Termin vereinbart oder verschoben wird.

5. Sicherheitssystem (2) mit einer Steuereinheit (3), wobei das Sicherheitssystem (2) zum Durchführen eines Verfahrens nach einem der vorhergehenden Ansprüche eingerichtet ist.

6. Kraftfahrzeug (1) mit einem nach Anspruch 5 ausgebildeten Sicherheitssystem (2).

## Claims

1. Method for operating a motor vehicle (1) which, due to a fault in a main braking system (4) of the motor vehicle (1), is switched from a normal mode into a fault mode by means of a control unit (3), in which fault mode a capacity of a drive unit (5) of the motor vehicle (1) is reduced and at least one navigation function of the motor vehicle (1) is activated, wherein in the fault mode, a further function of the motor vehicle (1) is activated by means of the control unit (3),
in the fault mode, a fault braking system (9, 10) is switched into a fault operating mode, so that the motor vehicle (1) can be braked in the fault mode by means of the fault braking system (9, 10),
in the fault mode, a capacity of a drive unit (5) of the motor vehicle (1) is determined on the basis of a capacity of the fault braking system (9, 10) of the motor vehicle, **characterized in that**
when a critical fault or a further critical fault occurs on/in the fault braking system (9) referred to as a first fault braking system, the motor vehicle (1) is switched into a second fault mode, so that the motor vehicle (1) can be braked in the second fault mode by means of the fault braking system (10) referred to as a second fault braking system,
the drive unit (5) of the motor vehicle (1) is controlled in such a way that, for a specified or specifiable period of time and/or for a specified or specifiable distance, the motor vehicle (1) can still be accelerated by means of the drive unit (5) up to a travel speed from which the motor vehicle (1) can still be safely braked by means of the corresponding fault braking system (9, 10), in the fault mode, navigation based on the fault mode is provided by the navigation function and,
in the fault mode, an occupant change-over meeting point is autonomously identified by means of the motor vehicle (1) and a further motor vehicle is called to this occupant change-over meeting point.

2. Method according to claim 1,
**characterized in that**
in the fault mode, a fault braking system (9, 10) of the motor vehicle (1), which fault braking system is downstream of the main braking system (4), is switched into a standby operating mode and consequently preconditioned, so that, in the case of a fault of another of the braking systems (4, 9), the motor vehicle (1) can immediately be braked at least by means of the fault braking system (9, 10) downstream of the main braking system (4) and at full capacity of the corresponding fault braking system (9, 10).

3. Method according to claim 1 or 2,
**characterized in that**
in order to provide the navigation based on the fault mode to the control unit (3) by means of a motor-vehicle-external device and/or by means of a motor-vehicle-internal device, information characterizing a journey of the motor vehicle (1) is provided, on the basis of which the navigation based on the fault mode is provided in the fault mode.

4. Method according to any of the preceding claims,
**characterized in that**
in the fault mode, an appointment concerning the occupant(s) is autonomously arranged or postponed by means of the motor vehicle (1).

5. Safety system (2) comprising a control unit (3), wherein the safety system (2) is designed to carry out a method according to any of the preceding claims.

6. Motor vehicle (1) comprising a safety system (2) designed according to claim 5.

## Revendications

1. Procédé permettant de faire fonctionner un véhicule automobile (1) qui, en raison d'une défaillance d'un système de freinage principal (4) du véhicule automobile (1), est commuté, au moyen d'une unité de commande (3), d'un mode de fonctionnement normal vers un mode de fonctionnement en cas de défaillance, dans lequel une capacité de puissance d'une unité d'entraînement (5) du véhicule automobile (1) est réduite et au moins une fonction de navigation du véhicule automobile (1) est activée,
dans lequel une autre fonction du véhicule automobile (1) est activée dans le mode de fonctionnement en cas de défaillance au moyen de l'unité de commande (3),
dans le mode de fonctionnement en cas de défaillance, un système de freinage en cas de défaillance (9, 10) est commuté vers un mode de fonctionnement en cas de défaillance, de sorte que le véhicule automobile (1) peut être freiné dans le mode de fonctionnement en cas de défaillance au moyen du système de freinage en cas de défaillance (9, 10),
dans le mode de fonctionnement en cas de défaillance, une capacité de puissance d'une unité d'entraînement (5) du véhicule automobile (1) est déterminée à l'aide d'une capacité de puissance du système de freinage en cas de défaillance (9, 10) du véhicule automobile, **caractérisé en ce que**
lors de l'apparition d'une défaillance critique ou d'une autre défaillance critique sur/dans le système de freinage en cas de défaillance (9) désigné comme système de freinage en cas de première défaillance, le véhicule automobile (1) est commuté vers un mode de fonctionnement en cas de seconde défaillance, de sorte que le véhicule automobile (1) peut être freiné dans le mode de fonctionnement en cas de seconde défaillance au moyen du système de freinage en cas de défaillance (10) désigné comme système de freinage en cas de seconde défaillance,
l'unité d'entraînement (5) du véhicule automobile (1) est commandée de telle sorte que, pour une durée prédéfinie ou pouvant être prédéfinie et/ou pour une distance prédéfinie ou pouvant être prédéfinie, le véhicule automobile (1) peut encore être accéléré au moyen de l'unité d'entraînement (5) jusqu'à une vitesse de déplacement à partir de laquelle le véhicule automobile (1) peut encore être freiné de manière sûre au moyen du système de freinage en cas de défaillance (9, 10) correspondant, dans le mode de fonctionnement en cas de défaillance, une navigation basée sur le mode de fonctionnement en cas de défaillance est mise à disposition par la fonction de navigation, et
dans le mode de fonctionnement en cas de défaillance, au moyen du véhicule automobile (1), un point de rencontre de changement d'occupant est identifié de manière autonome et un autre véhicule automobile est appelé à ce point de rencontre de changement d'occupant.

2. Procédé selon la revendication 1,
**caractérisé en ce que**
dans le mode de fonctionnement en cas de défaillance, un système de freinage en cas de défaillance (9, 10) du véhicule automobile (1), monté en aval du système de freinage principal (4), est commuté vers un mode de fonctionnement en attente et est par conséquent préconditionné, de sorte que, en cas de défaillance d'un autre des systèmes de freinage (4, 9), le véhicule automobile (1) peut être freiné directement au moins au moyen du système de freinage en cas de défaillance (9, 10) monté en aval du système de freinage principal (4) et avec la pleine capacité du système de freinage en cas de défaillance (9, 10) correspondant.

3. Procédé selon la revendication 1 ou 2,
**caractérisé en ce que**
pour la mise à disposition de la navigation basée sur le mode de fonctionnement en cas de défaillance à l'unité de commande (3), des informations caractérisant un trajet du véhicule automobile (1) sont mises à disposition au moyen d'un dispositif externe au véhicule automobile et/ou au moyen d'un dispositif interne au véhicule automobile, à l'aide desquelles informations la mise à disposition de la navigation basée sur le mode de fonctionnement en cas de défaillance est effectuée dans le mode de fonctionnement en cas de défaillance.

4. Procédé selon l'une des revendications précédentes,
**caractérisé en ce que**
dans le mode de fonctionnement en cas de défaillance, un rendez-vous concernant le ou les occupants est convenu ou reporté de manière autonome au moyen du véhicule automobile (1).

5. Système de sécurité (2) comportant une unité de commande (3), dans lequel le système de sécurité (2) est configuré pour mettre en œuvre un procédé selon l'une des revendications précédentes.

6. Véhicule automobile (1) comportant un système de sécurité (2) réalisé selon la revendication 5.
